# EUROPÄISCHE PATENTSCHRIFT

(11) **EP 1 310 323 B1**
(45) Veröffentlichungstag und Bekanntmachung des Hinweises auf die Patenterteilung: **30.03.2011**
(21) Anmeldenummer: 02025201.1
(22) Anmeldetag: 11.11.2002
(51) Int. Cl.: B23P 11/02, B23B 31/02

(54) **Schrumpfvorrichtung für einen Werkzeughalter**
Shrinking device for tool holder
Dispositif de contraction pour un porte-outil

(30) Priorität: 12.11.2001 DE 10155439; 17.05.2002 DE 10222092
(43) Veröffentlichungstag der Anmeldung: 14.05.2003
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Liska, Horst

(56) Entgegenhaltungen:
- EP-A- 1 103 338
- EP-A- 1 155 765
- WO-A-02/18093
- WO-A-99/12699
- WO-A-03/002298
- DE-A- 10 015 322
- DE-C- 10 015 074

## Beschreibung

Die Erfindung betrifft eine Schrumpfvorrichtung für einen ein Rotationswerkzeug im Presssitz in einer zentrischen Aufnahmeöffnung haltenden Werkzeughalter nach dem Oberbegriff des Anspruchs 1. Eine solche Schrumpfvorrichtung ist aus WO-99/12699 bekannt.

Zum Einspannen eines Rotationswerkzeugs, beispielsweise eines Bohrers, eines Fräsers oder eines Schleifwerkzeugs, in einem Werkzeughalter ist es bekannt, den Werkzeughalter mit einem eine Aufnahmeöffnung für den Schaft des Werkzeugs bereitstellenden Hülsenabschnitt auf den Werkzeugschaft aufzuschrumpfen. Dies wird insbesondere bei sehr schnell laufenden Werkzeugmaschinen so gemacht, d.h. Werkzeugmaschinen mit Drehzahlen von 10.000 bis 20.000 U/min oder sogar darüber, da die Schrumpftechnik eine äußerst rundlaufgenaue und damit unwuchtarme Einspannung des Werkzeugs erlaubt. Beim Aufschrumpfen wird der Bereich der Aufnahmeöffnung des Werkzeughalters zunächst erwärmt, üblicherweise auf einige 100 Grad Celsius, besipielsweise 250 bis 350 Grad, so dass das Werkzeug mit seinem Schaft in die sich hierdurch erweiternde Aufnahmeöffnung eingesteckt werden kann. Beim Abkühlen zieht sich der Hülsenabschnitt wieder zusammen, wodurch sich die Aufnahmeöffnung wieder verengt. Der Nenndurchmesser der Aufnahmeöffnung wird stets etwas kleiner als der Schaftdurchmesser des Werkzeugs gewählt, so dass nach dem Abkühlen das Werkzeug im Presssitz drehfest im Werkzeughalter gehalten ist.

Als Wärmequelle für die Erwärmung des Hülsenabschnitts kann beispielsweise eine Gasflamme oder eine in Anlagekontakt mit dem Werkzeughalter zu bringende elektrische Widerstandsheizmanschette dienen. Üblich geworden sind induktive Heizvorrichtungen mit einer mit Wechselstrom oder gepulstem Gleichstrom gespeisten Induktionsspule, die zentrisch auf den zu erwärmenden Bereich des Werkzeughalters aufgesetzt wird. Solche induktiven Heizvorrichtungen, wie sie z.B. aus WO 99/12699 bekannt sind, haben den Vorteil, dass die Aufwärmphase sehr kurz gehalten werden kann und der Heizvorgang berührungslos vonstatten gehen kann, die Induktionsspule also nicht in Berührungskontakt mit dem Werkzeughalter stehen muss.

Ebenfalls üblich geworden ist es, den Werkzeughalter nach der Heizphase zwangsweise zu kühlen, um die Abkühlphase zu beschleunigen. So ist es bekannt, luft-, insbesondere jedoch flüssigkeitsgekühlte Kühlmanschetten zu verwenden, die in Berührungskontakt auf den Hülsenabschnitt des Werkzeughalters aufgesetzt werden. Mit modernen Kühlmanschetten können so Abkühlphasen im Bereich von Sekunden**,** beispielsweise weniger als 10 oder 20 Sekunden, erzielt werden, nach denen eine Bedienungsperson den Werkzeughalter mit bloßen Händen anfassen kann, ohne Gefahr zu laufen, sich Brandverletzungen zuzuziehen.

Bei den bisher bekannt gewordenen Konzepten von Schrumpfvorrichtungen ist der Werkzeughalter in eine Aufnahmeeinheit einzusetzen, die während der Arbeitsvorgänge beim Aufschrumpfen regelmäßig stationär gehalten wird. Sämtliche Heiz- und Kühlelemente (oder allgemein Temperierelemente) werden bei den bisherigen Konzepten zu der stationär gehaltenen Aufnahmeeinheit hinbewegt und nach Gebrauch wieder wegbewegt. Induktionspulen sind dabei häufig an Säulen oder Schienen angebracht, an denen sie in Richtung der Achse des in der Aufnahmeeinheit gehaltenen Werkzeughalters verfahrbar geführt sind, so dass sie präzise über den Werkzeughalter bewegt und anschließend wieder entfernt werden können. Kühlelemente müssen üblicherweise sogar von Hand zwischen dem Werkzeughalter und einer Aufbewahrungsstation hin- und her getragen werden. Auch Vermessungssysteme, mittels derer das Werkzeug oder/und der Werkzeughalter zu Voreinstellungszwecken vermessen werden können, weisen gemeinhin Komponenten wie eine Kamera oder andere Positionserfassungselemente auf, die an einer Säule oder Schiene axial verstellbar geführt sind und im Rahmen der vorbereitenden Tätigkeit für das Aufschrumpfen relativ zur Aufnahmeeinheit axial verfahren werden.

In der prioritätsälteren, aber nicht vorveröffentlichten WO 02/18093 A1 wird vorgeschlagen, den Werkzeughalter und das zugehörige Rotationswerkzeug in einem Voreinstellgerät zu vermessen und, gesteuert von dem Voreinstellgerät einen relativ zu einer Aufnahmeeinheit für den Werkzeughalter verschiebbaren Aufnahmedorn so zu positionieren, dass der Anschlagdorn den Einsteckweg des Rotationswerkzeugs in dem Werkzeughalter auf eine gewünschte Position begrenzt. Die Aufnahmeeinheit für den Werkzeughalter ist zusammen mit dem relativ dazu positionierten Aufnahmedorn auf einer Schiene verschiebbar geführt, sodass der Werkzeughalter relativ zu einer den Werkzeughalter thermisch aufweitenden Induktionsspule verschiebbar ist.

Demgegenüber ist die erfindungsgemäße Schrumpfvorrichtung durch die in Anspruch 1 angegebenen Merkmale gekennzeichnet. Vorteilhafte Ausgestaltungen der Erfindung sind in den abhängigen Ansprüchen dargestellt.

Die Erfindung schlägt eine Schrumpfvorrichtung für einen ein Rotationswerkzeug im Presssitz in einer zentrischen Aufnahmeöffnung haltenden Werkzeughalter vor, mit einer Aufnahmeeinheit zur Aufnahme des Werkzeughalters und einer Temperiervorrichtung zumindest zur Wärmedehnung, insbesondere auch zur anschließenden Kühlung des Werkzeughalters im Bereich der Aufnahmeöffnung, wobei erfindungsgemäß vorgesehen ist, dass die Aufnahmeeinheit an einem. Schlitten angeordnet ist, welcher auf einem zur Achse des in der Aufnahmeeinheit aufgenommenen Werkzeughalters parallel verlaufenden, auf einer Tragbasis befestigten Schienensystem in Schienenlängsrichtung verfahrbar geführt ist und entlang seines Verfahrwegs in einen Einwirkbereich der Temperiervorrichtung bewegbar ist.

Die erfindungsgemäße Lösung bietet für die Aufnahmeinheit eine Verfahrmöglichkeit in Richtung der Achse des darin gehaltenen Werkzeughalters. Auf dem Schienensystem kann der die Aufnahmeeinheit tragende Schlitten in mindestens eine Axialposition bewegt werden, an der die Temperiervorrichtung auf den in der Aufnahmeeinheit gehaltenen Werkzeughalter temperierend einwirken kann, ihn also erwärmen oder/und kühlen kann. Nach erfolgter Temperierung kann der Schlitten mitsamt der Aufnahmeeinheit und dem Werkzeughalter wieder aus dem Einwirkbereich der Temperiervorrichtung herausbewegt werden. Während des Schrumpfprozesses können folglich axiale Bewegungen der Temperiervorrichtung vermieden werden; diese kann während des Schrumpfprozesses axial stationär bleiben. Insgesamt hat sich gezeigt, dass das erfindungsgemäße Kozept der axial verfahrbaren Aufnahmeinheit die Voraussetzung dafür bietet, in einer Schrumpfvorrichtung die Anzahl der Komponenten zu verringern, die im Rahmen der Tätigkeiten zur Vorbereitung und Ausführung eines Schrumpfprozesses axial zu bewegen sind (axial bezeichnet hier stets die Richtung der Achse des in der Aufnahmeeinheit gehaltenen Werkzeughalters, gleichbedeutend mit der Schienenlängsrichtung). Dies schafft zugleich die Voraussetzung dafür, auf Wunsch mehr Komponenten einer Schrumpfvorrichtung als bisher axial fest an der Tragbasis zu montieren und hierdurch den Aufwand für Konstruktion, Montage und Betriebssteuerung der Schrumpfvorrichtung zu senken, wenngleich (dies sei ausdrücklich festgehalten) es die erfindungsgemäße Lösung keinesfalls impliziert, dass diese Komponenten, beispielsweise die Temperiervorrichtung, tatsächlich axial stationär an der Tragbasis anzubauen sind.

Es ist grundsätzlich möglich, dass die Temperiervorrichtung Erwärmung und Kühlung des Werkzeughalters entlang des Schienensystems an einer gleichen Axialposition des Schlittens leisten kann, der Schlitten für die Kühlung des Werkzeughalters also nicht in eine andere Axialposition bewegt werden muss als für die Erwärmung des Werkzeughalters. Bei anderen Versionen kann der Schlitten jedoch entlang seines Verfahrwegs auf dem Schienensystem nacheinander an eine erste Axialposition für die Erwärmung des Werkzeughalters und im Abstand hiervon an eine zweite Axialposition für die Kühlung des Werkzeughalters zu bewegen sein.

Bei einer bevorzugten Weiterbildung der Erfindung umfasst die Temperiervorrichtung mindestens eine Temperiereinheit, welche quer, insbesondere in einer Orthogonalebene zur Schienenlängsrichtung zwischen mindestens einer vorgerückten Stellung, in der die Temperiereinheit in den Verfahrweg des Schlittens hineinbewegt ist und ein Temperierelement der Temperiereinheit in eine das Einfahren des Werkzeughalters in eine Durchtrittsöffnung des Temperierelements ermöglichende Einwirkstellung gebracht oder bringbar ist, und einer zurückgezogenen Stellung, in der die Temperiereinheit aus dem Verfahrweg des Schlittens herausbewegt ist, verstellbar geführt an der Tragbasis angeordnet ist. Diese Ausgestaltung eröffnet große Wahlfreiheit bei der Anordnung der Temperiervorrichtung entlang des Schienensystems. Insbesondere kann die Temperiervorrichtung an beliebiger Stelle zwischen den Enden des Verfahrwegs des Schlittens angeordnet werden, beispielsweise annähernd mittig. Dennoch kann der gesamte Verfahrweg des Schlittens genutzt werden, da es möglich ist, die Temperiereinheit nur bei Bedarf in den Verfahrweg des Schlittens hineinzubewegen, sie ansonsten aber außerhalb des Verfahrwegs des Schlittens zu halten, so dass dann der Schlitten ungehindert den axialen Bereich der Temperiereinheit passieren kann.

Bevorzugt weist das Temperierelement eine für die Erwärmung den Bereich der Aufnahmeöffnung des Werkzeughalters in radialem Abstand ringförmig umschließende Induktionsspule auf. Nach anderen Methoden arbeitende Heizelemente sind gleichwohl nicht ausgeschlossen, etwa elektrische Widerstandsheizmanschette oder von einem Wärmeträgermedium, etwa Öl, durchströmbare Heizmanschetten.

Ein zur Kühlung verwendetes Temperierelement weist vorzugsweise eine von Kühlflüssigkeit durchströmbare, für die Kühlung auf den Werkzeughalter in Berührungskontakt aufsetzbare Kühlmanschette auf. Andere Kühlelemente, beispielsweise luftgekühlte Kühlringe, sind ebenfalls denkbar. In jedem Fall sind jedoch von einer Kühlflüssigkeit durchströmte, auf den Werkzeughalter im Berührungskontakt aufsetzbare Kühlmanschetten bevorzugt, da die Kühlkapazität solcher von Kühlflüssigkeit durchströmter Kühlmanschetten beträchtlich größer ist als die Kühlkapazität luftgekühlter Kühlringe. Bei der Kühlflüssigkeit kann es sich um Wasser handeln. Die Kühlflüssigkeit durchströmt zweckmäßigerweise einen geschlossenen Kühlmittelkreislauf zwischen der Kühlmanschette und einem die erwärmte Kühlflüssigkeit wieder kühlenden Kühlaggregat. Bei dem Kühlaggregat kann es sich um eine nach dem Wärmepumpenprinzip arbeitende Kältemaschine handeln. Die Kältemaschine kann an den Kühlflüssigkeitskreislauf über einen Wärmetauscher angeschlossen sein, was den Vorteil hat, dass das durch die Kühlmanschette einerseits und innerhalb der Kältemaschine andererseits strömende Kühlmittel voneinander verschieden sein können.

Es hat sich aber auch als zweckmäßig erwiesen, wenn der die Kühlmanschette enthaltende Kühlmittelkreislauf als Wärmepumpenkreislauf ausgebildet ist, bei welchem die Kühlmanschette unmittelbar ein Verdampferelement des Wärmepumpenkreislaufs der Kältemaschine bildet. Bei einer solchen Ausgestaltung entfällt der zusätzliche Wärmetauscher zwischen Kältemaschine und Kühlmanschette, so dass das Kühlaggregat insgesamt sehr klein und kostengünstig aufgebaut werden kann. Die Idee, die Kühlmanschette unmittelbar als Verdampferelement eines Wärmepumpenkreislaufs auszunutzen, lässt sich auch bei anderen Schrumpfvorrichtungen als der vorstehend erläuterten Schrumpfvorrichtung nutzen, beispielsweise bei Schrumpfgeräten, wie sie zum Beispiel in der prioritätsälteren, jedoch nachveröffentlichten internationalen Anmeldung WO01/89758 A1 beschrieben sind. Insoweit hat diese Idee selbständige erfinderische Bedeutung für ein Schrumpfgerät, insbesondere ein induktives Schrumpfgerät mit einer an einen Kühlmittelkreislauf angeschlossenen Kühlmanschette.

Es können Temperierelemente verwendet werden, die entweder ausschließlich zur Kühlung oder ausschließlich zur Erwärmung des Werkzeughalters dienen. Es ist aber auch denkbar, Temperierelemente zu verwenden, die wahlweise kühlend oder erwärmend betreibbar sind. Dem Gedanken, in einer Schrumpfvorrichtung für einen ein Rotationswerkzeug im Presssitz in einer zentrischen Aufnahmeöffnung haltenden Werkzeughalter eine zur Wärmedehnung und anschließenden Kühlung des Werkzeughalters im Bereich von dessen Aufnahmeöffnung dienende Temperiervorrichtung so auszugestalten, dass ein den Bereich der Aufnahmeöffnung des Werkzeughalters für die Temperierung ringförmig umschließendes Temperierelement der Temperiervorrichtung wahlweise kühlend oder erwärmend betreibbar ist, wird im Übrigen unabhängig von der Anbringung der Aufnahmeeinheit an einem axial verfahrbaren Schlitten selbständige Bedeutung zugemessen. Die Formulierung eines auf diesen Gedanken gerichteten selbständigen Schutzbegehrens wird ausdrücklich vorbehalten.

Ein wahlweise kühlend oder erwärmend betreibbares Temperierelement könnte beispielsweise als eine von Wasser oder einem anderen flüssigen Kühlmittel durchströmbare Temperiermanschette ausgebildet sein, in das eine Induktionsspule eingebaut ist. Die Temperiermanschette wird sowohl zur Erwärmung als auch zur Kühlung auf den Bereich der Aufnahmeöffnung des Werkzeughalters aufgesetzt. Während der Kühlphase wird hierbei ein flächiger Berührungskontakt zwischen der Temperiermanschette und dem Werkzeughalter hergestellt, so dass ein Kühleffekt wie bei gängigen Kühlmanschetten eintritt. Während der Erwärmungsphase jedoch wird die Temperiermanschette in radialem Abstand vom Außenumfangsmantel des Werkzeughalters gehalten, so dass keine Kühlwirkung auf den Werkzeughalter ausgeübt wird, sondern statt dessen nur die bestromte Induktionsspule von dem in der Temperiermanschette enthaltenen Kühlmittel gekühlt wird. Dies kann insofern von Vorteil sein, als hierdurch der temperaturabhängige spezifische Widerstand des für die Induktionsspule verwendeten Drahtmaterials bei Bestromung der Induktionsspule gering gehalten werden kann. Da marktgängige Werkzeughalter im Bereich ihrer Aufnahmeöffnung häufig leicht konisch geformt sind, kann eine geringfügige Relativverlagerung zwischen Werkzeughalter und Temperiermanschette genügen, um den Berührungskontakt zwischen der Temperiermanschette und dem Werkzeughalter herzustellen bzw. aufzuheben.

Ein anderes sowohl kühlend als auch erwärmend betreibbares Temperierelement könnte beispielsweise von einer in Berührungskontakt auf den Bereich der Aufnahmeöffnung des Werkzeughalters aufsetzbaren Temperiermanschette gebildet sein, die wahlweise mit einem flüssigen Wärmeträgermedium, etwa heißem Öl, oder mit einem Kälteträgermedium, etwa kaltem Öl, durchströmbar ist. Eine solche Temperiermanschette wird sowohl für die Erwärmung als auch für die Kühlung des Werkzeughalters in Berührungskontakt mit dem Werkzeughalter gehalten; für die Erwärmung und die Kühlung werden lediglich unterschiedlich temperierte Flüssigkeiten in die Temperiermanschette eingeleitet.

Die Temperiereinheit kann in Schienenlängsrichtung stationär an der Tragbasis angebracht sein. Gelegentlich kann es jedoch erwünscht sein, dass die Temperiereinheit in Schienenlängsrichtung verstellbar, jedoch arretierbar an der Tragbasis angeordnet ist.

Um die Temperiereinheit dann, wenn sie nicht in Gebrauch ist, vor unbeabsichtigter mechanischer Einwirkung in Form von Stößen oder Schlägen und vor Einwirkung von Schmutz und Staub zu schützen, ist es vorteilhaft, wenn die Temperiereinheit in ihrer zurückgezogenen Stellung geschützt in einen Unterbringungsraum eingefahren ist, aus dem sie zum Erreichen ihrer vorgerückten Stellung ausfahrbar ist.

Zwischen ihrer zurückgezogenen und ihrer vorgerückten Stellung kann die Temperiereinheit wenigstens zum Teil linearbeweglich, aber auch schwenkbeweglich geführt sein. Sie kann mit einem einzigen, gewünschtenfalls an die Größe des Werkzeughalters anpassbaren Temperierelement bestückt oder bestückbar sein. Alternativ kann sie mit mehreren wahlweise jeweils einzeln in Einwirkstellung relativ zum Werkzeughalter bringbaren Temperierelementen bestückt oder bestückbar sein. Dies erlaubt es, die Einsatzbreite der Schrumpfvorrichtung zu erhöhen, indem auf unterschiedliche Werkzeughalter abgestimmte Temperierelemente verwendet werden. In letzterem Fall kann die Temperiereinheit einen um seine Tellerachse drehbar gehaltenen Revolverteller umfassen, an dem die Temperierelemente in Umfangsrichtung verteilt angeordnet sind. Dieser Revolverteller kann seinerseits an einem Schwenkarm in und aus dem Verfahrweg des Schlittens schwenkbar angebracht sein. Eine denkbare Variante hierzu könnte darin bestehen, einen linear geführten Schieber mit mehreren in einer Reihe angeordneten Temperierelementen zu bestücken.

Es empfiehlt sich, dass das Temperierelement betriebsmäßig auswechselbar an der Temperiereinheit angeordnet ist. Dann ist ein leichter Austausch des Temperierelements möglich, sollte dieses beschädigt oder funktionsunfähig werden.

Gemäß einer bevorzugten Weiterbildung kann die Temperiervorrichtung eine Mehrzahl von mindestens zwei unabhängig voneinander verstellbar geführten Temperiereinheiten umfassen. Diese Temperiereinheiten können wenigstens zum Teil in Schienenlängsrichtung hintereinander angeordnet sein. Es ist aber auch möglich, wenigstens eine Teilanzahl der Temperiereinheiten einander quer zur Schienenlängsrichtung gegenüberliegend anzuordnen.

Bei einer Ausführungsform kann die Temperiervorrichtung dann zwei Gruppen von in Schienenlängsrichtung jeweils benachbart hintereinander angeordneten, mit je einen einzigen Temperierelement bestückten oder bestückbaren Temperiereinheiten umfassen, wobei die Temperierelemente der einen Gruppe sämtlich zur Kühlung des Werkzeughalters dienen und die Temperierelemente der anderen Gruppe sämtlich zur Erwärmung des Werkzeughalters dienen.

Bei einer anderen Ausführungsform kann die Temperiervorrichtung zwei Temperiereinheiten umfassen, deren jede mit mehreren wahlweise jeweils einzeln in Einwirkstellung relativ zum Werkzeughalter bringbaren Temperierelementen bestückt oder bestückbar sind, wobei die Temperierelemente der einen Temperiereinheit sämtlich zur Kühlung des Werkzeughalters dienen und die Temperierelemente der anderen Temperiereinheit sämtlich zur Erwärmung des Werkzeughalters dienen.

Die erfindungsgemäße Lösung eignet sich für horizontale Lösungen, bei denen das Schienensystem mit zur Horizontalen im wesentlichen paralleler Schienenlängsrichtung an der Tragbasis befestigt ist, wie auch für vertikale Lösungen, bei denen das Schienensystem mit zur Vertikalen im wesentlichen paralleler Schienenlängsrichtung an der Tragbasis befestigt ist. Vorstellbar ist es freilich auch, das Schienensystem mit schräg zur Horizontalen, insbesondere unter einem kleinen spitzen Winkel hierzu, verlaufender Schienenlängsrichtung an der Tragbasis zu befestigen.

Da, wenn das Werkzeug von einer Bedienungsperson händisch in die thermisch erweiterte Aufnahmeöffnung des Werkzeughalters eingesetzt wird, die Gefahr besteht, dass sich die Bedienungsperson am erhitzten Material des Werkzeughalters schmerzhafte Brandverletzungen zuzieht, ist erfindungsgemäss eine das Werkzeug zu dessen Einführung in die Aufnahmeöffnung des Werkzeughalters relativ zu dieser radial positioniert haltende Positionierhalterungseinheit vorgesehen. Die Positionierhalterungseinheit gewährleistet ein zuverlässiges, sicheres Eintauchen des Werkzeugschafts in die Aufnahmeöffnung des Werkzeughalters, wenn die Aufnahmeeinheit mit dem Werkzeughalter und die Positionierhalterungseinheit mit dem Werkzeug relativ aufeinanderzu bewegt werden.

Zur gegenseitigen Annäherung der Aufnahmeeinheit und der Positionierhalterungseinheit besteht dann die Möglichkeit, dass der die Aufnahmeeinheit tragende Schlitten vollständig an die Positionierhalterungseinheit heranfahrbar ist; in diesem Fall kann die Positionierhalterungseinheit in Schienenlängsrichtung stationär angeordnet sein. Es kann aber auch die Positionierhalterungseinheit an einem weiteren auf dem Schienensystem in Schienenlängsrichtung verfahrbar geführten Schlitten angeordnet sein, welcher zur Einführung des Werkzeugs in die Aufnahmeöffnung des Werkzeughalters relativ zum erstgenannten Schlitten auf diesen zu bewegbar ist. Durch die Bereitstellung zweier unabhängig voneinander verfahrbarer Schlitten ist eine nicht unwesentliche Beschleunigung der Abläufe beim Aufschrumpfen erzielbar, da die während eines Schrumpfprozesses insgesamt zurückzulegenden Wege auf zwei Schlitten aufgeteilt werden können anstatt von einem einzigen Schlitten übernommen werden zu müssen.

Zweckmäßigerweise wird mindestens eine Führungsschiene des Schienensystems zur gemeinsamen Führung beider Schlitten dienen. Dies vereinfacht die Konstruktion der Schrumpfvorrichtung.

Wenn die Positionierhalterungseinheit in mindestens einer achsnormalen Richtung justierbar ist, ist eine einfache Anpassung der Positionierhalterungseinheit an unterschiedliche Werkzeugdurchmesser möglich. Etwaige verbleibende Fluchtungsfehler zwischen Werkzeughalter und Werkzeug können dadurch ausgeglichen werden, dass die Positionierhalterungseinheit mit radialem Bewegungsspiel an dem zweitgenannten Schlitten angebracht ist.

Bei horizontalem oder schräg zur Horizontalen geneigtem Verlauf des Schienensystems kann eine konstruktiv besonders einfache Lösung dadurch erreicht werden, dass die Positionierhalterungseinheit eine nach oben offene, in Schienenlängsrichtung verlaufende Positionierrinne aufweist, in die das Werkzeug einlegbar ist. Eine prismatische Form der Positionierrinne erlaubt dabei eine präzise radiale Positionierung des Werkzeugs. Um das in die Positionierrinne gelegte Werkzeug auch axial ausrichten zu können, kann der Positionierrinne eine Anschlagfläche zur axialen Positionierung des Werkzeugs zugeordnet sein.

Genügt es nicht oder ist es nicht möglich, das Werkzeug lose in eine Positionierrinne zu legen, etwa weil Erschütterungen zu befürchten sind oder weil die Schrumpfvorrichtung als vertikale Einheit ausgeführt ist, kann die Positionierhalterungseinheit Klemmmittel zur radialen Einklemmung des Werkzeugs umfassen. Die Klemmmittel können dabei eine Anordnung relativ aufeinander zu bewegbarer Klemmbacken umfassen, zwischen denen das Werkzeug einklemmbar ist. Mindestens eine der Klemmbacken kann hierbei als Klemmprisma ausgebildet sein. Es ist aber auch möglich, anders geformte Klemmbacken zu verwenden, etwa gerundete Backen. Auch müssen die Klemmmittel keine Klemmbacken aufweisen, sondern können beispielsweise eine elastisch aufweitbare, etwa spreizbare Haltehülse aufweisen, die das Werkzeug radial positioniert halten kann.

Gemäß einer Weiterbildung der erfindungsgemäßen Schrumpfvorrichtung kann an dem erstgenannten Schlitten eine mit ihrer Spindelachse gleichachsig zu dem in der Aufnahmeeinheit aufgenommenen Werkzeughalter angeordnete, an einem ihrer Enden mit der Aufnahmeeinheit drehfest verbundene oder verbindbare Spindel um ihre Spindelachse drehbar gelagert sein, wobei der erstgenannte Schlitten ferner einen Antriebsmotor zum rotierenden Antrieb der Spindel trägt und die Aufnahmeeinheit zur drehfesten Einspannung des Werkzeughalters ausgebildet ist. Eine an dem erstgenannten Schlitten angeordnete Sensoranordnung erlaubt dabei die Erfassung während der Rotationsbewegung der Spindel auf diese wirkender Unwuchtkräfte. Es können so Funktionen einer Wuchtmaschine in die Schrumpfvorrichtung integriert werden und zu günstigen Preisen eine kombinierte Wucht-Schrumpf-Maschine angeboten werden.

Einige Werkzeughalter weisen eine zentrisch in der Aufnahmeöffnung angeordnete, axial justierbare Anschlagschraube für das Werkzeug auf. Mittels dieser Anschlagschraube kann die Eindringtiefe des Werkzeugschafts in der Aufnahmeöffnung des Werkzeughalters und so die für die Steuerung von NC-Werkzeugmaschinen wichtige Gesamtlänge der Einheit aus Werkzeughalter und darin eingespanntem Werkzeug eingestellt werden. Der Antriebsmotor, mittels dessen die Spindel antreibbar ist, kann nun vorteilhafterweise auch zur Voreinstellung der Anschlagschraube genutzt werden. Wenn nämlich an der Tragbasis eine ein Schraubwerkzeug radial ausgerichtet zu der Anschlagschraube haltende Haltekonstruktion angebracht ist, genügt es nach Ineingriffbringen des Schraubwerkzeugs und der Anschlagschraube, durch entsprechende Ansteuerung des Antriebsmotors den Werkzeughalter zu drehen, um eine Verstellung der Anschlagschraube zu erzielen. Eine solche motorische Verstellung erlaubt eine sehr präzise Justierung der Anschlagschraube, was von den Anwendern der Werkzeuge und Werkzeughalter zunehmend stärker gefordert wird. Überdies eröffnet dies die Möglichkeit zu einer automatisierten Voreinstellung der Anschlagschraube, wodurch das Bedienungspersonal entlastet wird. Es versteht sich, dass ein Antriebsmotor gewählt werden wird, der sowohl bei den für die Unwuchtmessung benötigten höheren Drehzahlen als auch bei den für die Voreinstellung benötigten niedrigeren Drehzahlen exakt steuerbar ist.

Alternativ ist es auch vorstellbar, zur Voreinstellung der Anschlagschraube das Schraubwerkzeug mittels eines gesonderten, an der Haltekonstruktion montierten motorischen Drehantriebs anzutreiben und den Werkzeughalter stattdessen gegen Drehung zu blockieren. Es versteht sich zudem, dass auch dann an dem erstgenannten Schlitten ein den Werkzeughalter zum Zweck der Voreinstellung der Anschlagschraube antreibender Antriebsmotor angeordnet sein kann, wenn eine Sensoranordnung zur Unwuchtmessung fehlt.

Bevorzugt umfasst die Haltekonstruktion eine Bewegungsführung, mittels der das Schraubwerkzeug quer, insbesondere in einer Orthogonalebene zur Schienenlängsrichtung in und aus dem Verfahrweg des erstgenannten Schlittens bewegbar ist. Beispielsweise kann das Schraubwerkzeug an einem Schwenkarm in und aus dem Verfahrweg des Schlittens schwenkbar sein, wenngleich ohne weiteres auch eine lineare Bewegungsführung für das Schraubwerkzeug vorstellbar ist.

Im Regelfall wird es genügen, wenn die Haltekonstruktion in Schienenlängsrichtung stationär an der Tragbasis angebracht ist. Auch hier ist jedoch eine Verstellbarkeit der Haltekonstruktion in Schienenlängsrichtung nicht grundsätzlich ausgeschlossen.

Es empfiehlt sich, dass das Schraubwerkzeug axial federnd an der Haltekonstruktion abgestützt ist. Auf diese Weise sind axiale Ausgleichsbewegungen des Schraubwerkzeugs möglich, wenn sich die Anschlagschraube im Zuge ihrer Justierung axial verlagert. Zudem können Stöße abgefedert werden, wenn das Schraubwerkzeug und die Anschlagschraube aufeinander treffen.

Vorzugsweise weist die erfindungsgemäße Schrumpfvorrichtung eine an der Tragbasis angeordnete, insbesondere optische Positionserfassungseinrichtung zur Durchführung von Positionserfassungsaufgaben zumindest an dem in der Positionierhalterungseinheit gehaltenen Werkzeug auf. Solche Positionserfassungsaufgaben fallen beispielsweise an, wenn das Werkzeug in die Positionierhalterungseinheit eingesetzt wird und die axiale Lage des Werkzeugs relativ zu der Positionierhalterungseinheit oder/und die Länge des Werkzeugs zu bestimmen ist. Die Positionserfassungseinrichtung kann in Schienenlängsrichtung stationär sein, alternativ jedoch können Komponenten der Positionserfassungseinrichtung auch verfahrbar an der Tragbasis angebracht sein.

Zweckmäßigerweise werden dem erstgenannten Schlitten Linearantriebsmittel zugeordnet sein, mittels welcher er in Schienenlängsrichtung antreibbar ist. Auch dem zweitgenannten Schlitten werden vorteilhafterweise Linearantriebsmittel zugeordnet sein, mittels welcher er in Schienenlängsrichtung unabhängig von dem erstgenannten Schlitten antreibbar ist.

Von Anwendern der erfindungsgemäßen Schrumpfvorrichtung kann der Wunsch geäußert werden, einen vollautomatischen Schrumpfbetrieb realisieren zu können, bei dem das Bedienungspersonal soweit als möglich von manuell vorzunehmenden Bedienungsarbeiten entlastet ist. Zu diesem Zweck kann ein automatisches Zufuhr- und Entnahmesystem zumindest für den Werkzeughalter, insbesondere auch für das Werkzeug, vorgesehen sein, wobei dieses Zufuhr- und Entnahmesystem dazu eingerichtet ist, den Werkzeughalter und ggf. das Werkzeug zwischen der Schrumpfvorrichtung und einem Bereithaltungsort hin und her zu transportieren. Bei dem Bereithaltungsort kann es sich um ein Lager oder Magazin handeln, in dem eine Vielzahl gleicher oder/und unterschiedlicher Werkzeughalter und Werkzeuge bereitgehalten werden. Es ist freilich nicht ausgeschlossen, dass der Bereithaltungsort von einer außerhalb eines solchen Lagers befindlichen Übergabestelle gebildet ist, an der das Zufuhr- und Entnahmesystem vom Bedienungspersonal dorthin gelegte Werkzeughalter und ggf. Werkzeuge aufnimmt und sie dort ablegt. Insbesondere kann das Zufuhr- und Entnahmesystem mindestens einen Greifroboter umfassen, wobei selbstverständlich auch andere Lösungen zur automatischen Zufuhr und Entnahme des Werkzeughalters und ggf. des Werkzeugs denkbar sind.

Herkömmliche, das Rotationswerkzeug im Presssitz haltende Werkzeughalter definieren eine Referenz- bzw. Bezugsposition, die es erlaubt, die axiale Position des Rotationswerkzeugs relativ zum Werkzeughalter und damit relativ zur Spindel der den Werkzeughalter aufnehmenden Werkzeugmaschine reproduzierbar zu vermessen. Die axiale Bezugsposition kann beispielsweise bei Steilkegel-Werkzeughaltern durch einen vorbestimmten Durchmesser des Steilkegels oder bei Hohlsteilkegel-Werkzeughaltern (HSK-Werkzeughalter) durch eine zur Arbeitsspindel weisende Schulterfläche definiert sein. In der Praxis ist es nun erwünscht, dass der Abstand dieser axialen Bezugsposition des Werkzeughalters zur halterfernen Spitze des Rotationswerkzeugs eine vorbestimmte Länge hat, so dass bei einem Werkzeugwechsel die Einstellung der Werkzeugmaschine nicht verändert werden muss. Es wird deshalb angestrebt, das Rotationswerkzeug in einer solchen axialen Position in den Werkzeughalter einzuschrumpfen, dass dieser vorbestimmte Abstand zwischen der Werkzeugspitze und der axialen Bezugsposition des Werkzeughalters nach dem Einschrumpfen möglichst exakt vorliegt. Soweit der Werkzeughalter, wie vorstehend erläutert, eine innere, axial in die Aufnahmeöffnung ragende Schraube umfasst, die die Eintauchtiefe des Werkzeugschafts beim Einschrumpfen begrenzt, so kann diese Anschlagschraube bei bekannter Länge des einzuschrumpfenden Werkzeugs so vorjustiert werden, dass die gewünschte Position des Werkzeugs sichergestellt ist, wenn es beim Einschrumpfen bis zum Anschlag an diese Schraube in die Aufnahmeöffnung eingeführt wird. Die Voreinstellung der in die Aufnahmeöffnung des Werkzeughalters ragenden, axial justierbaren Anschlagschraube kann mittels des vorstehend erwähnten Schraubwerkzeugs vor dem thermischen Aufweiten des Werkzeughalters aber auch während der Erwärmungsphase erfolgen.

Bei herkömmlichen Schrumpfgeräten, die eine vorbestimmte axiale Positionierung des Werkzeugs relativ zum Werkzeughalter erlauben, wird die gewünschte Gesamtlänge während des Einschrumpfvorgangs gemessen, also zu einem Zeitpunkt, zu welchem der Werkzeughalter zur Wärmedehnung auf erhöhte Temperatur ist. Die Erwärmung des Werkzeughalters verändert jedoch nicht nur die radialen Abmessungen im Bereich der Aufnahmeöffnung, sondern auch die axialen Abmessungen, mit der Folge, dass die im erwärmten Zustand eingestellte vorbestimmte Länge zwischen axialer Bezugsposition des Werkzeughalters und der Spitze des Werkzeugs im kalten Zustand des Werkzeughalters verkürzt wird und damit fehlerhaft eingestellt ist.

Wenngleich Messfehler dieser Art vermieden werden können, wenn die Anschlagschraube im kalten Zustand des Werkzeughalters auf die gewünschte Position eingestellt wird, so setzt dies jedoch Werkzeughalter mit Einstellschraube voraus. Es ist deshalb eine weitere Aufgabe der Erfindung, eine Schrumpfvorrichtung anzugeben, die es erlaubt, Rotationswerkzeuge auch dann in Werkzeughalter so einzuschrumpfen, dass sie eine vorbestimmte Länge zwischen einer axialen Bezugsposition des Werkzeughalters und der Spitze des Rotationswerkzeugs haben, wenn der Werkzeughalter keinen axial justierbaren Anschlag hat, oder eine axiale Justierung eines solchen Anschlags nicht erwünscht ist.

Vorzugsweise löst die Erfindung das vorstehende Problem dadurch, dass die den Werkzeughalter haltende Aufnahmeeinheit, eine das Rotationswerkzeug gleichachsig zur Aufnahmeöffnung des in der Aufnahmeeinheit gehaltenen Werkzeughalters haltende Positionierhalterungseinheit sowie die bereits erwähnte Temperiervorrichtung jeweils relativ zueinander in Achsrichtung der Aufnahmeöffnung bewegbar an einer Tragbasis angeordnet sind und dass an der Tragbasis eine Einstelleinrichtung angeordnet ist, mittels der bei wärmegedehntem Werkzeughalter der Abstand zwischen einem werkzeugnahen Stirnende des in der Aufnahmeeinheit gehaltenen Werkzeughalters und dem zum werkzeughalterfernen Stirnende des in die Aufnahmeöffnung eingreifenden Rotationswerkzeugs auf einen vorbestimmten Abstandswert einstellbar ist.

Eine solche Schrumpfvorrichtung macht sich zunutze, dass der axiale Abstand zwischen der axialen Bezugsposition des Werkzeughalters und seiner werkzeugnahen Stirnfläche für den kalten Werkzeughalter bekannt ist, zumindest jedoch an dem kalten Werkzeughalter gemessen werden kann. Wird, wie vorgeschlagen, das Rotationswerkzeug so in den Werkzeughalter eingeschrumpft, dass der Abstand zwischen der werkzeugnahen Stirnfläche des Werkzeughalters und der Spitze des Werkzeugs auf den genannten vorbestimmten Abstandswert justiert ist, so werden wärmedehnungsbedingte Toleranzen eliminiert. Der vorbestimmte Abstandswert zwischen der werkzeugnahen Stirnfläche des Werkzeughalters und der Spitze des Werkzeugs wird beim Einsetzen des Werkzeugs im kalten Zustand gemessen bzw. justiert, und die gewünschte Gesamtlänge zwischen der axialen Bezugsposition des Werkzeughalters und der Spitze des Werkzeugs ergibt sich frei von Wärmedehnungstoleranzen aus der bei kaltem Werkzeughalter bestimmten Länge zwischen der axialen Bezugsposition des Werkzeughalters und der werkzeugnahen Stirnfläche einerseits zuzüglich des vorbestimmten Abstandwerts zwischen der werkzeugnahen Stirnfläche des Werkzeughalters und der Spitze des Werkzeugs. In Kenntnis der gewünschten Gesamtlänge und des am kalten Werkzeughalter bestimmten Abstands zwischen der axialen Bezugsposition des Werkzeughalters und dessen werkzeugnaher Stirnfläche lässt sich so ohne weiteres der für die gewünschte Gesamtlänge einzustellende vorbestimmte Abstandswert ermitteln.

Bei der vorstehend erläuterten Schrumpfvorrichtung ist das Rotationswerkzeug gleichachsig zur Aufnahmeöffnung des in der Aufnahmeeinheit gehaltenen Werkzeughalters in einer Positionierhalterungseinheit gehalten. Die Erfindung ist jedoch auch bei Schrumpfvorrichtungen einsetzbar, bei welchen eine solche Positionierhalterungseinheit fehlt, das einzuschrumpfende Werkzeug also zum Beispiel von Hand in den wärmegedehnten Werkzeughalter eingeführt wird. Auch in solchen Ausgestaltungen lässt sich die vorstehend erläuterte Erfindung verwirklichen, beispielsweise indem die Einstelleinrichtung einen Anschlag für die Spitze des Werkzeugs hat und das Werkzeug von Hand gegen den auf den vorbestimmten Abstandswert eingestellten Anschlag gestellt wird, solange der Werkzeugschaft noch in der wärmegedehnten Aufnahmeöffnung des Werkzeughalters verschiebbar ist. Auch hier lässt sich der Vorteil erreichen, dass Wärmedehnungstoleranzen bei der Bemessung der Gesamtlänge eliminiert werden. Es versteht sich, dass der Anschlag der Einstelleinrichtung auch von einem Positionierantrieb während der Wärmedehnungsphase justiert wird, so dass das von Hand geführte Werkzeug mittels der Einstelleinrichtung in den Werkzeughalter eingeschoben wird.

Die Einstelleinrichtung kann eine die Position des werkzeugnahen Stirnendes des Werkzeughalters oder/und des zum Werkzeughalter fernen Stirnendes des Rotationswerkzeugs bezogen auf das jeweils andere Stirnende oder bezogen auf eine Bezugsposition der Aufnahmeeinheit oder der PositionierhalterungseinheiterfassendePositionserfassungseinrichtungaufweisen. Mit anderen Worten die Positionserfassungseinrichtung kann den vorbestimmten Abstandswert unmittelbar messen oder aus zwei Einzelmessungen, die sich auf Bezugspositionen der Aufnahmeeinheit oder der Positionierhalterungseinheit beziehen, ermitteln.

Der Einstelleinrichtung ist zweckmäßigerweise ein die Aufnahmeeinheit und die Positionierhalterungseinheit relativ zueinander bewegender Positionierantrieb zugeordnet, der den Relativvorschub dieser Einheiten so regelt, dass sich der vorbestimmte Abstandswert ergibt.

Ausführungsbeispiele der Erfindung werden nachfolgend anhand der beigefügten Zeichnungen näher erläutert. Darin stellen dar:
Fig. 1 in schematischer Perspektivansicht ein als horizontale Einheit ausgeführtes erfindungsgemäßes Schrumpfgerät für schrumpfbare Werkzeughalter rotierender Werkzeuge,
Fig. 2 schematisch einen Schnitt durch eine Auflagerinne für ein einzuspannendes Werkzeug bei dem Schrumpfgerät der Fig. 1,
Fig. 3 schematisch eine Abwandlung zu dem Schrumpfgerät der Fig. 1,
Fig. 4 schematisch einen Schnitt durch eine bei einem erfindungsgemäßen Schrumpfgerät verwendbare Klemmhalterung für ein einzuspannendes Werkzeug,
Fig. 5 in schematischer Perspektivansicht ein als vertikale Einheit ausgeführtes erfindungsgemäßes Schrumpfgerät,
Fig. 6 einen Axiallängsschnitt durch einen im Zusammenhang mit erfindungsgemäßen Schrumpfgeräten verwendbaren beispielhaften Werkzeughalter und
Fig. 7 einen Axiallängsschnitt durch einen weiteren Werkzeughalter zur Erläuterung einer bei erfindungsgemäßen aber auch anderen Schrumpfgeräten einsetzbaren Methode zur Voreinstellung der Gesamtlänge des Werkzeughalters.

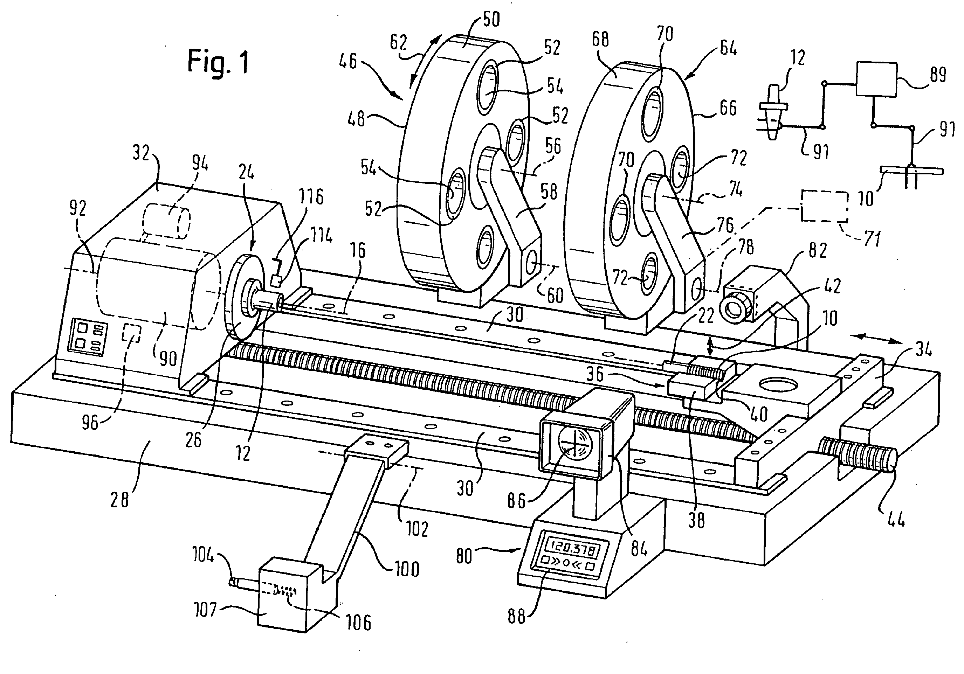

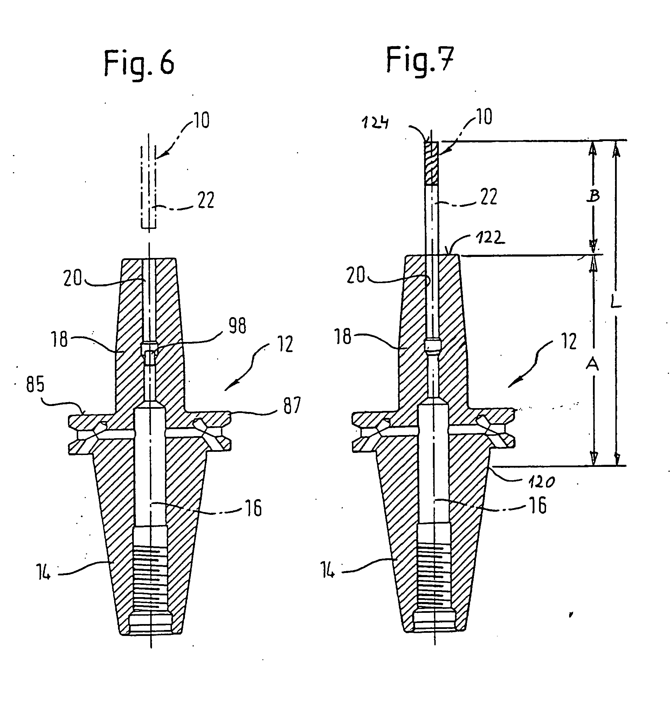

Fig. 1 zeigt ein als transportable Einheit ausgeführtes Schrumpfgerät, mit dem ein Rotationswerkzeug 10, beispielsweise ein Bohrer oder Fräser, in einen Werkzeughalter 12 eingespannt und aus diesem ausgespannt werden kann. Derartige Werkzeughalter, wie in Fig. 6 einer gezeigt ist, weisen gemeinhin einen Kupplungsschaft 14 auf, mit dem sie in eine Werkzeugmaschine zentrisch einspannbar sind. Genormte Kupplungsschäfte besitzen beispielsweise die Form eines Steilkegels oder Hohlsteilkegels (HSK). In Achsrichtung dem Kupplungsschaft 14 gegenüberliegend (die Werkzeughalterachse ist in Fig. 6 mit 16 bezeichnet) weisen die Werkzeughalter einen hülsenförmigen Werkzeugaufnahmebereich 18 mit einer zentrischen, im wesentlichen zylindrischen Aufnahmeöffnung 20 für den Schaft des Werkzeugs 10 auf. Der Innendurchmesser der Aufnahmeöffnung 20 ist in einem für die Einspannung des Werkzeugs vorgesehenen Spannbereich etwas kleiner als der Außendurchdurchmesser des hier mit 22 bezeichneten Werkzeugschafts, was zur Folge hat, dass der Aufnahmebereich 18 des Werkzeughalters 12 zunächst erwärmt werden muss, bevor sich das Werkzeug 10 mit seinem Schaft 22 in den thermisch erweiterten Spannbereich der Aufnahmeöffnung 20 einführen lässt. Nach dem Abkühlen, wenn sich der Aufnahmebereich 18 des Werkzeughalters 12 wieder zusammengezogen hat, sitzt das Werkzeug 10 im Presssitz in der Aufnahmeöffnung 20.

Die hier vorgestellten Schrumpfgeräte sind in der Lage, den Aufnahmebereich 18 des Werkzeughalters 12 innerhalb weniger Sekunden auf eine hinreichende Temperatur von beispielsweise etwa 300 Grad Celsius zu erwärmen und nachfolgend in vergleichbar kurzer Zeit (beispielsweise in etwa 30 Sekunden bei Zwangskühlung auch beträchtlich weniger) für eine Abkühlung auf Umgebungstemperatur zu sorgen, zumindest jedoch auf eine Temperatur, die so niedrig ist, dass der Werkzeughalter 12 gefahrlos mit der bloßen Hand angefasst werden kann.

Für den Schrumpfvorgang wird der Werkzeughalter 12 bei dem Schrumpfgerät der Fig. 1 mit horizontaler Achse 16 in eine allgemein mit 24 bezeichnete Aufnahmeeinheit 24 eingesetzt, die in an sich bekannter Weise einen schematisch angedeuteten Aufnahmekörper 26 mit einer Öffnung aufweist, in die der Werkzeughalter 12 mit seinem Kupplungsschaft 14 einsteckbar ist. Die Aufnahmeeinheit 24 umfasst nicht näher dargestellte Haltemittel, beispielsweise in Form einer Spannzange, die den Werkzeughalter 12 in Kontakt mit Stützflächen des Aufnahmekörpers 26 halten. Vorzugsweise ist der Aufnahmekörper 26 als Adapter ausgeführt, der im Rahmen eines gegebenenfalls automatischen Schnellwechselsystems bei Bedarf ausgewechselt werden kann. Eine solche Adapterlösung erlaubt es, das Schrumpfgerät an unterschiedliche Typen von Kupplungsschäften der Werkzeughalter anzupassen.

Als ein wesentliches Merkmal der Erfindung ist die Aufnahmeeinheit 24 axial, d.h. in Richtung der Achse 16 des in sie eingesetzten Werkzeughalters 12, verfahrbar. Im Beispielfall der Fig. 1 ist hierzu auf einer als Tragbasis des Schrumpfgeräts dienenden Grundplatte 28 ein System zweier horizontaler, in gegenseitigem Abstand parallel zueinander verlaufender Führungsschienen 30 befestigt, auf denen ein die Aufnahmeeinheit 24 tragender Schlitten 32 in Schienenlängsrichtung beweglich geführt ist. Die Aufnahmeeinheit 24 ist so an dem Schlitten 32 angebracht, dass die Werkzeughalterachse 16 parallel zur Schienenlängsrichtung verläuft. Die Führung des Schlittens 32 auf den Führungsschienen 30 kann im einfachsten Fall gleitend sein; eine Führung mittels an dem Schlitten 32 gehaltener, endlos umlaufender Wälzkörperschleifen oder mittels einer Rollenlagerung ist gleichwohl nicht ausgeschlossen. Zur einfachen Herstellung können die Führungsschienen 30 beispielsweise von im Querschnitt rechteckförmigen Materialstreifen aus Metall oder Hartkunststoff gebildet sein. Selbstverständlich sind beliebige andere Querschnittsgeometrien der Führungsschienen 30 möglich. Es versteht sich, dass das Schienensystem statt der zwei Führungsschienen 30 auch mehr als zwei Schienen oder sogar nur eine einzige Schiene aufweisen kann.

Unabhängig von dem ersten Schlitten 32 ist auf den Führungsschienen 30 ein weiterer Schlitten 34 in Schienenlängsrichtung beweglich geführt, wiederum der einfachen Konstruktion wegen vorzugsweise gleitend, wobei freilich eine Wälzführung dieses zweiten Schlittens 34 ebenso möglich ist. Es versteht sich, dass alternativ die beiden Schlitten 32, 34 auch auf gesonderten Führungsschienen geführt sein können. Der zweite Schlitten 34 trägt eine allgemein mit 36 bezeichnete Positionierhalterungseinheit, die der Aufnahme und Positionierung des in den Werkzeughalter 12 einzuspannenden Werkzeugs 10 dient. In der Positionierhalterungseinheit 36 wird das Werkzeug 10 derart radial in Bezug auf den Werkzeughalter 12 positioniert gehalten, dass sein Schaft 22 bei gegenseitiger relativer Annäherung der beiden Schlitten 32, 34 in die thermisch erweiterte Aufnahmeöffnung 20 des Werkzeughalters 12 eintaucht.

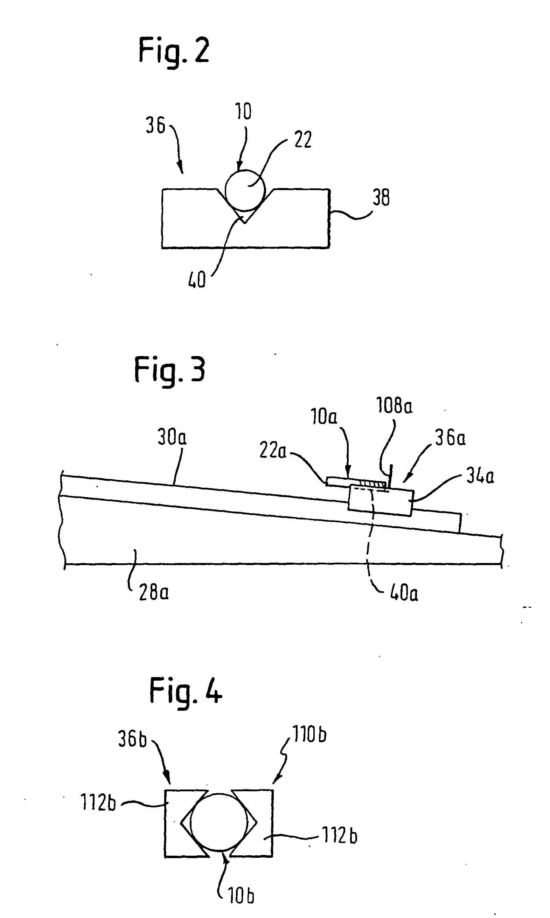

Im Beispielfall des in Fig. 1 gezeigten horizontalen Schrumpfgeräts weist die Positionierhalterungseinheit 36 einen Auflagetisch 38 auf, in den in axialer Richtung, also in Schienenlängsrichtung, eine Positionierrinne 40 eingearbeitet ist. Das Werkzeug 10 wird so in diese Positionierrinne 40 eingelegt, dass es mit seinem Schaft 22 über die dem ersten Schlitten 32 zugewandte Tischkante des Auflagetisches 38 hinausragt. Das Maß, um das der Werkzeugschaft 10 über den Auflagetisch 38 übersteht, sollte wenigstens etwas größer sein als die gewünschte Einsetztiefe des Werkzeugschafts 22 in die Aufnahmeöffnung 20 des Werkzeughalters 12. Die Positionierrinne 40 ist vorzugsweise prismatisch ausgeführt, wie anhand des in Fig. 2 gezeigten Rinnenquerschnitts erkennbar ist. Durch eine solche Prismenform der Positionierrinne 40 kann eine sichere, wackelfreie Positionierung des Werkzeugs 10 erzielt werden. Zugleich gewährleistet ein Auflageprisma eine Zentrierung des Werkzeugs 10 in horizontaler Radialrichtung unabhängig vom Werkzeugdurchmesser. Andere Positioniermittel, die eine achsparallele Positionierung und auch Fixierung ermöglichen, wie insbesondere eine Zange oder Klemmhülse oder Klemmbacken, lassen sich alternativ oder auch in Verbindung mit der Positionierrinne 40 einsetzen.

Um das Werkzeug 10 auch in vertikaler Radialrichtung zur Achse 16 des Werkzeughalters 12 ausrichten zu können, ist der Auflagetisch 38 höhenverstellbar, wie in Fig. 1 durch einen Doppelpfeil 42 angedeutet. Die Höhenverstellbarkeit ermöglicht eine Anpassung an unterschiedliche Werkzeugdurchmesser. Die Höhenverstellung des Auflagetisches 38 kann beispielsweise manuell erfolgen, indem eine Bedienungsperson an einer entsprechenden Stellschraube dreht. Der Auflagetisch 38 kann auch unterstützt durch einen motorischen Stellantrieb höhenjustierbar sein. In einem solchen Fall ist es vorstellbar, dass eine Bedienungsperson den Stellantrieb über ein entsprechendes Bedienungsorgan nach Wunsch ein- und ausschalten kann. Es ist jedoch auch eine vollautomatische Höhenjustierung des Auflagetisches 38 denkbar, bei der die Bedienungsperson den Werkzeugdurchmesser lediglich an einem Bedienungspult des Schrumpfgeräts eingeben muss und eine elektronische Steuereinheit des Schrumpfgeräts abhängig hiervon den Stellantrieb steuert. Es versteht sich, dass alternativ bzw. zusätzlich auch die Aufnahmeeinheit 24 höhenjustierbar ausgebildet sein kann.

Beide Schlitten 32, 34 sind in nicht näher dargestellter Weise mittels je eines Linearantriebs unabhängig voneinander entlang der Führungsschienen 30 antreibbar. Als Linearantrieb kommt beispielweise ein Spindeltrieb, insbesondere Kugelgewindetrieb, in Frage, dessen Gewindespindel drehbar an der Grundplatte 28 gelagert und an einem ihrer Enden mit einem Antriebsmotor gekoppelt ist. Eine in Schraubeingriff mit der Spindel stehende Spindelmutter ist dabei unverdrehbar mit dem betreffenden Schlitten 32 bzw. 34 verbunden. Solche Spindeltriebe sind an sich bekannt; lediglich zur Veranschaulichung ist in Fig. 1 eine Gewindespindel 44 als Teil eines derartigen Spindeltriebs eingezeichnet. Auch andere Antriebskonzepte sind denkbar. So kann wenigstens einer der Linearantriebe beispielsweise als Riemen- oder Kettentrieb ausgebildet sein, bei dem mindestens ein mit dem betreffenden Schlitten 32 bzw. 34 zugfest verbundenes, zu einer endlosen Schleife geschlossenes flexibles Zugmittel in Form eines Antriebsriemens oder einer Antriebskette mittels eines Antriebsmotors zum Umlauf längs der Schleife antreibbar ist. Ebenso sind Antriebskonzepte mit einem Linearmotor vorstellbar.

Um den Aufnahmebereich 18 des Werkzeughalters 12 zu erwärmen, umfasst das Schrumpfgerät eine allgemein mit 46 bezeichnete Heizvorrichtung, welche im Beispielfall der Fig. 1 eine Heizeinheit 48 mit einem Drehteller 50 aufweist, der in Tellerumfangsrichtung verteilt mit mehreren, hier vier Heizelementen 52 bestückt ist. Die Heizelemente 52 enthalten jeweils eine Induktionsspule, die aus einem nicht näher dargestellten Induktionsstromgenerator mit Wechselstrom oder gepulstem Gleichstrom vorzugsweise änderbarer Frequenz zwischen beispielsweise 50 Hz und einigen kHz, etwa 20 kHz, speisbar ist. Dieser Erregerstrom induziert Wirbelströme in dem metallischen Material des Werkzeughalters 12, wenn der Werkzeughalter 12 mit seinem Aufnahmebereich 18 zentrisch in den mit 54 bezeichneten Innenraum eines der Induktionsheizelemente 52 eingeführt ist. Auf diese Weise wird der Aufnahmebereich 18 des Werkzeughalters 12 induktiv erwärmt.

Für unterschiedliche Werkzeughalter 12 ist der Drehteller 50 mit unterschiedlichen Induktionsheizelementen 52 bestückt, die sich hinsichtlich der Größe ihres Innenraums 54 oder/und hinsichtlich ihrer Induktionsspule unterscheiden. Für eine noch größere Einsatzbreite des Schrumpfgeräts können die Induktionsheizelemente 52 auswechselbar an dem Drehteller 50 angebracht sein, wobei die Induktionsheizelemente 52 zweckmäßigerweise alle eine gleiche Standardschnittstelle zum Drehteller 50 aufweisen werden. Es kann sogar der gesamte Drehteller 50 auswechselbar sein, um ihn bei Bedarf gegen einen mit anderen Induktionsheizelementen 52 bestückten Drehteller austauschen zu können.

Der Drehteller 50 ist um seine bei 56 angedeutete Tellerachse drehbar an einem Schwenkarm 58 angebracht, welcher seinerseits um eine zur Schienenlängsrichtung parallele Schwenkachse 60 schwenkbar, in Schienenlängsrichtung jedoch stationär an der Grundplatte 28 angebracht ist. An dem Schwenkarm 58 ist der Drehteller 50 in einer achsnormalen Ebene zwischen einer zurückgezogenen Stellung und einer vorgerückten Stellung verschwenkbar, wie durch einen Doppelpfeil 62 angedeutet. In der zurückgezogenen Stellung ist der Drehteller 50 vollständig aus dem Verfahrweg des ersten Schlittens 32 herausbewegt, so dass Letzterer an der Heizeinheit 48 vorbeibewegt werden kann. In der vorgerückten Stellung ist der Drehteller 50 soweit in den Verfahrweg des Schlittens 32 hineingeschwenkt, dass der in der Aufnahmeeinheit 24 aufgenommene Werkzeughalter 12 auf dem Kreis der Induktionsheizelemente 52 liegt.

Der Drehteller 50 ist durch Drehen um die Tellerachse 56 in verschiedene Arbeits-Drehstellungen einstellbar, in denen in der vorgeschwenkten Stellung des Schwenkarms 58 jeweils eines der Induktionselemente 52 in Flucht mit dem Werkzeughalter 12 ist. Durch axiales Heranfahren des Schlittens 32 an die Heizeinheit 48 kann dann der Werkzeughalter 12 mit seinem Aufnahmebereich 18 voraus in den Innenraum 54 des betreffenden Induktionsheizelements 52 eingefahren werden. Der Drehteller 50 kann manuell drehbar sein. Dabei empfiehlt es sich, dass geeignete Verrastungsmittel den Drehteller 50 in den Arbeits-Drehstellungen spürbar verrasten, um der Bedienungsperson das Auffinden dieser Drehstellungen zu erleichtern. Es ist aber auch eine motorische Einstellung des Drehtellers 50 in die Arbeits-Drehstellungen möglich. Insbesondere kann diese Einstellung vollautomatisch erfolgen, indem eine Bedienungsperson über ein Bedienungspult den jeweiligen Werkzeughaltertyp oder die zu verwendende Induktionsspule eingibt und in Antwort darauf eine elektronische Steuereinheit des Schrumpfgeräts die Einstellung des Drehtellers 50 in die korrekte Arbeits-Drehstellung bewirkt.

Der Schwenkarm 58 kann manuell zwischen seiner vorgerückten und seiner zurückgezogenen Schwenkstellung verschwenkbar sein, aber auch motorisch unterstützt sein, wobei an dem Schrumpfgerät ein Bedienungselement vorgesehen sein kann, mittels dessen eine Bedienungsperson den Schwenkarm 58 vor- und zurückbewegen kann. Insbesondere kann die Schwenkbetätigung des Schwenkarms 58 vollautomatisch nach Maßgabe eines in einer Steuerzentrale ablaufenden Steuerprogramms erfolgen, welches die gesamten Arbeitsabläufe des Schrumpfgeräts steuert.

Zur raschen Abkühlung des Werkzeughalters 12 nach dessen Erwärmung umfasst das Schrumpfgerät eine allgemein mit 64 bezeichnete Kühlvorrichtung. Die Kühlvorrichtung 64 umfasst bei dem in Fig. 1 gezeigten Ausführungsbeispiel eine im Abstand von der Heizeinheit 48 entlang des Verfahrwegs des Schlittens 32 angeordnete Kühleinheit 66 mit einem Drehteller 68, an dem in Tellerumfangsrichtung verteilt mehrere, hier vier auf unterschiedliche Werkzeughalter abgestimmte Kühlelemente 70 angebracht oder anbringbar sind. Die Kühlelemente 70 sind vorzugsweise flüssigkeitsgekühlt und werden über flexible Schläuche oder andere Flüssigkeitsleitungsmittel mit Kühlflüssigkeit aus einem bei 71 schematisch dargestellten Kühlaggregat versorgt. Sie weisen einen zentralen Durchgang 72 auf, in den der Werkzeughalter 12 unter Herstellung flächigen Anlagekontakts zwischen seinem Aufnahmebereich 18 und dem kühlenden Innenumfangsmantel des jeweiligen Kühlelements 70 einfahrbar ist. Insbesondere handelt es sich bei den Kühlelementen 70 um Kühlmanschetten, wie sie von der Fa. Franz Haimer GmbH unter der Typenbezeichnung Power-Clamp auf dem Markt angeboten werden und in der internationalen Patentanmeldung mit dem Aktenzeichen PCT/EP 00/04645 (WO 01/89758 A1) beschrieben sind.

Das Kühlaggregat 71 ist zweckmäßigerweise als Wärmepumpen-Aggregat ausgebildet, bei welchem ein verdampfbares, flüssiges Kühlmittel in einem Wärmepumpenkreislauf zwischen einem Verdichter und einem Verdampfer zirkuliert. Der Wärmepumpenkreislauf kann nach dem Absorberprinzip arbeiten oder aber einen Kompressor als Verdichter umfassen. Die Kühlelemente 70 können über einen Sekundär-Kühlflüssigkeitskreislauf mittels eines Wärmetauschers an den Wärmepumpenkreislauf angeschlossen sein. Zweckmäßigerweise bildet jedoch das momentan im Betrieb befindliche Kühlelement 70 unmittelbar den Verdampfer des Wärmepumpenkreislaufs, was zu einer beträchtlichen Verringerung der Abmessungen des Kühlaggregats 71 führt.

Analog zur Heizeinheit 48 ist auch der Drehteller 68 der Kühleinheit 66 um seine Tellerachse 74 drehbar an einem Schwenkarm 76 angebracht, der seinerseits um eine zur Schienenlängsrichtung parallele Schwenkachse 78 in einer achsnormalen Ebene zwischen einer zurückgezogenen Stellung und einer vorgerückten Stellung verschwenkbar, in Schienenlängsrichtung jedoch wiederum stationär an der Grundplatte 28 angebracht ist. Aufgrund der übereinstimmenden Drehteller-Schwenkarm-Konstruktion von Heizeinheit 48 und Kühleinheit 66 wird hinsichtlich der Einstellung des Drehtellers 68 in verschiedene Arbeits-Drehstellungen und der Bedeutung der Schwenkstellungen des Schwenkarms 76 auf die zuvor im Rahmen der Erläuterung der Heizeinheit 48 gemachten Ausführungen verwiesen, um unnötige Wiederholungen zu vermeiden. Erwähnt sei jedenfalls noch, dass auch bei der Kühleinheit 66 der Drehteller 68 mit auswechselbaren Kühlelementen 70 bestückt sein kann oder/und der Drehteller 68 als solcher auswechselbar sein kann.

In einer bevorzugten Ausgestaltung haben die auf dem Drehteller 68 angeordneten Kühlelemente 70 gleiche Abmessungen und gleichen Aufbau, wobei zur Anpassung an unterschiedliche Werkzeughalterabmessungen in die Kühlelemente 70 unterschiedliche hülsenförmige Adapter eingesetzt sind, die einerseits in flächigem Anlagekontakt mit dem Werkzeughalter und andererseits in flächigem Anlagekontakt mit dem Innenumfang des Kühlelements 70 stehen. Wenngleich im Ausführungsbeispiel der Fig. 1 mehrere Kühlelemente 70 zu einer Einheit zusammengefasst sind, so kann in einer Variante auch ein einziges Kühlelement 70 vorgesehen sein, in das zur Anpassung an unterschiedliche Werkzeughalter Wärmeleitadapter der vorstehend erläuterten Art manuell oder automatisiert einsetzbar sind.

Es ist im Übrigen auch denkbar, eine kombinierte Heiz- und Kühlvorrichtung zu realisieren, bei der Heizelemente und Kühlelemente an einem gemeinsamen, in und aus dem Verfahrweg des Schlittens 32 bewegbaren Träger angeordnet sind. Beispielsweise kann bei dem Schrumpfgerät der Figur 1 der Drehteller 50 oder/und der Drehteller 68 sowohl mit Induktionsheizelementen 52 als auch mit Kühlelementen 70 bestückt sein. Bei kombinierter Anordnung von Induktionsheizelementen 52 und Kühlelementen 70 an einem gemeinsamen Drehteller könnte bei dem Schrumpfgerät der Figur 1 dann sogar einer der dortigen Drehteller 50, 68 weggelassen werden, was die Konstruktion weiter vereinfachen würde.

Sollen die Bewegungen des Schlittens 34 von einer elektronischen Steuereinheit gesteuert werden, so muss diese neben Informationen zur Position der Schlitten 32 und 34 auch eine Information über die Lage des auf den Auflagetisch 38 aufgelegten Werkzeugs 10 relativ zu dem Schlitten 34 haben. Insbesondere muss der Steuereinheit bekannt sein, wo sich in einer bestimmten Axialposition des Schlittens 34 das dem Werkzeughalter 12 zugewandte, schaftseitige Ende oder/und das schaftferne Ende des Werkzeugs 10 befindet. Diese Information ist notwendig, damit der Werkzeugschaft 22 exakt um ein gewünschtes Maß in die Aufnahmeöffnung 20 des Werkzeughalters 12 eingeführt wird. Zu diesem Zweck ist an der Grundplatte 28 eine optische Positionserfassungseinrichtung 80 montiert, die im dargestellten Beispielfall der Fig. 1 als Durchlichtsystem mit einer Lichtquelle 82 und einem von der Lichtquelle 82 rückseitig bestrahlten Durchlichtmonitor 84 aufgebaut ist, auf dessen Monitorschirm ein Fadenkreuz 86 eingeblendet oder eingezeichnet ist. Das Fadenkreuz 86 ist auf den Werkzeugschaft 22 bzw. den Schneidenbereich des Werkzeugs ausgerichtet; zur Anpassung an unterschiedliche Werkzeugdurchmesser kann der Monitor 84 höhenverstellbar sein. An einem Bedienungspult 88 kann der Benutzer durch Tastendruck den Schlitten 34 vor- und zurückbewegen, bis das schaftseitige Ende des Werkzeugs 10 mit der vertikalen Linie des Fadenkreuzes 86 fluchtet. Dann drückt er eine entsprechende Taste an dem Bedienungspult 88, und die Steuereinheit übernimmt die in diesem Moment von dem Schlitten 34 eingenommene Axialposition als Referenz für die nachfolgenden Steuervorgänge an dem Schlitten 34. Der Monitor 84 und die Lichtquelle 82 können in diesem Fall in Schienenlängsrichtung stationär an der Grundplatte 28 angebaut sein.

Alternativ ist es denkbar, den Monitor 84 und gewünschtenfalls auch die Lichtquelle 82 in Schienenlängsrichtung verfahrbar an der Grundplatte anzubringen, so dass die Position des schaftseitigen oder des schaftfernen Werkzeugendes dadurch erfasst werden kann, dass bei festgehaltenem Schlitten 34 der Monitor 84 und ggf. die Lichtquelle 82 solange axial verfahren werden, bis das Fadenkreuz 86 genau über das Werkzeugende gebracht ist.

Statt eines Durchlichtsystems kann die Positionserfassungseinrichtung 80 beispielsweise auch eine Lichtschranke oder eine Kamera aufweisen. Hierbei kann jede Art von Kamera oder Bildverarbeitungssystem verwendet werden. Geeignet ist auch ein automatisches Positionserfassungssystem, das die Werkzeugposition automatisch erfassen kann, ohne dass eine Bedienungsperson hierzu den Schlitten 34 oder eine optische Komponente mittels Tastenbetätigung nach Augenmaß verfahren muss.

Nachfolgend wird beispielhaft ein automatischer Schrumpfvorgang erläutert. Voraussetzung hierfür ist (wie bereits mehrfach angesprochen) eine die verschiedenen Komponenten des Schrumpfgeräts steuernde Steuereinheit, in der ein entsprechendes Steuerprogramm implementiert ist. Es wird davon ausgegangen, dass bei dem in Fig. 1 gezeigten Schrumpfgerät eine solche Steuereinheit sowie eine Bedieneinheit vorhanden sind, über die eine Bedienungsperson Parameter des Werkzeughalters und des Werkzeugs eingeben kann.

Im Rahmen dieses beispielhaften Schrumpfvorgangs gibt die Bedienungsperson über die Bedieneinheit den Durchmesser und die Länge des verwendeten Werkzeugs 10, Größen- und Längenwerte für den verwendeten Werkzeughalter 12 sowie einen gewünschten Längenwert für das Ensemble aus Werkzeughalter 12 mit darin eingespanntem Werkzeug 10 ein. Bei dem Längenwert für das Ensemble aus Werkzeughalter 12 und Werkzeug 10 handelt es sich um den Wert einer Länge, die zwischen der Werkzeugspitze d.h. dem schaftfernen Werkzeugende und einem Referenzpunkt an dem Werkzeughalter gemessen ist. Dieser Referenzpunkt kann beispielsweise - bei Betrachtung der Figur 6 - an der mit 85 bezeichneten werkzeugnahen Axialseite eines zwischen dem Kupplungsflansch 14 und dem Aufnahmebereich 18 ausgebildeten Ringflansches 87 des Werkzeughalters 12 aber auch auf der werkzeugfernen Axialseite dieses Ringflansches 87 gebildet sein. Es versteht sich, dass als Referenzpunkt jede andere Stelle des Werkzeughalters 12, die bezogen auf die Halteraufnahme der Werkzeugmaschinenspindel eine reproduzierbare Axialposition festlegt, geeignet ist. Insbesondere bei Steilkegel-Werkzeughaltern ist es üblich geworden, den Referenzpunkt durch eine Axialposition zu definieren, in welcher der kegelförmige Kupplungsflansch 14 einen vorbestimmten Durchmesser hat.

Unabhängig davon, wo am Werkzeughalter 12 der Referenzpunkt gelegt wird, wird nachfolgend für die zwischen der Werkzeugspitze und diesem Referenzpunkt gemessene Länge der Einheit aus Werkzeughalter 12 und Werkzeug 10 der Begriff Gesamtlänge verwendet. Nach Eingabe der vorstehend angegebenen Parameterwerte führt die Bedienungsperson den Werkzeughalter 12 in die Öffnung des Aufnahmekörpers 26 der Aufnahmeeinheit 24 ein und betätigt eine entsprechende Taste an der Bedieneinheit, woraufhin geeignete Haltemittel in der Aufnahmeeinheit 24 aktiviert werden und den Werkzeughalter 12 greifen. Ferner legt sie das Werkzeug 10 auf den Auflagetisch 38 und führt die oben erläuterte Erfassung der Werkzeugposition mit Hilfe der Positionserfassungseinrichtung 80 durch.

Sodann drückt die Bedienungsperson an der Bedieneinheit eine Starttaste. Daraufhin fährt der Auflagetisch 38 in eine dem eingegebenen Werkzeugdurchmesser entsprechende Höhenposition, und der Drehteller 50 rotiert in eine Arbeits-Drehstellung, in der ein für die eingegebene Größe des Werkzeughalters 12 passendes Induktionsheizelement 52 bei Hereinschwenken des Schwenkarms 58 in Flucht mit dem Werkzeughalter 12 gelangt. Der Schwenkarm 58 schwenkt vor und bringt so das betreffende Induktionsheizelement 52 in Flucht mit dem Werkzeughalter 12. Dann fährt der Schlitten 32 aus seiner in Fig. 1 gezeigten Ausgangsposition axial an den hereingeschwenkten Drehteller 48 heran und führt den Werkzeughalter 12 mit seinem Aufnahmebereich 18 in das betreffende Induktionsheizelement 52 ein. Die Steuereinheit bewirkt nun in der Induktionsspule dieses Induktionsheizelements 52 einen Stromfluss mit von der Größe des Werkzeughalters 12 abhängiger Stärke oder/und Frequenz oder/und Zeitdauer. Der zweite Schlitten 34 mit dem auf dem Auflagetisch 38 liegenden Werkzeug 10 fährt aus seiner in Fig. 1 gezeigten Ausgangsposition an den Drehteller 50 heran, wobei der Werkzeugschaft 22 in die infolge der induktiven Erwärmung erweiterte Aufnahmeöffnung 20 des Werkzeughalters 12 eintaucht; Letzterer ist dabei immer noch in das Induktionsheizelement 52 eingefahren, auch wenn der Stromfluss in diesem nunmehr abgeschaltet ist. Der Schlitten 34 fährt das Werkzeug 10 soweit in die Aufnahmeöffnung 20 des Werkzeughalters 12 hinein, bis das vom Benutzer vorgegebene Maß für die Gesamtlänge der Einheit aus Werkzeughalter 12 und Werkzeug 10 erreicht ist. Wie tief das Werkzeug 10 hierbei in den Werkzeughalter 12 eingetaucht werden muss, errechnet die Steuereinheit aus den eingegebenen Information, die die Werte für die Werkzeuglänge und die gewünschte Gesamtlänge, sowie der Länge des Werkzeughalters bezogen auf den Referenzpunkt repräsentieren.

Sobald sich der Aufnahmebereich 18 des Werkzeughalters 12 wieder soweit verengt hat, dass das Werkzeug 10 fest darin sitzt (dies kann bereits kurz nach Abschaltung des Stromflusses in der Induktionsspule der Fall sein), fährt der Schlitten 34 in seine Ausgangsposition zurück. Auch der Schlitten 32 fährt zurück, wenngleich nicht notwendigerweise in seine Ausgangsposition, so doch soweit, dass der Werkzeughalter 12 mit dem Werkzeug 10 aus dem Innenraum 54 des Induktionsheizelements 52 herausbewegt sind und der Drehteller 50 an der Werkzeugspitze vorbeibewegt werden kann. Sodann schwenkt der Schwenkarm 58 zurück.

Anschließend rotiert der Drehteller 68 der Kühleinheit 66 in eine solche Arbeits-Drehstellung, in der ein für die eingegebene Größe des Werkzeughalters 12 passendes Kühlelement 70 bei Einschwenken des Schwenkarms 76 in Flucht mit dem Werkzeughalter 12 gelangt. Der Schwenkarm 76 schwenkt vor und bringt so das betreffende Kühlelement 70 in Flucht mit dem Werkzeughalter 12. Dann fährt der Schlitten 32 an den hereingeschwenkten Drehteller 68 heran und führt den noch heißen Werkzeughalter 12 mit dem Werkzeug 10 voraus in das betreffende Kühlelement 70 ein.

Nach dem Kühlen des Werkzeughalters 12 fährt der Schlitten 32 zurück in seine Ausgangsposition, und der Schwenkarm 76 mit dem Drehteller 68 schwenkt zurück. Auf einen Tastendruck an der Bedieneinheit hin geben die Haltemittel den Werkzeughalter 12 frei, so dass Letzterer aus der Aufnahmeeinheit 24 entnommen werden kann.

Nachdem das Werkzeug 10 in den Werkzeughalter 12 eingeschrumpft und die Abkühlphase mittels der Kühlvorrichtung 64 beendet ist, erfolgt vorzugsweise noch eine Vermessung der Einheit aus Werkzeughalter 12 und Werkzeug 10 hinsichtlich ihrer Gesamtlänge, wobei als Gesamtlänge - wie zuvor erläutert - der axiale Abstand zwischen der Werkzeugspitze und deren vorbestimmten Referenzpunkt an dem Werkzeughalter 12 verstanden wird. Die Messung der Gesamtlänge kann beispielsweise erfolgen, indem sowohl die Werkzeugspitze als auch der Referenzpunkt des Werkzeughalters 12 nacheinander mittels der Positionserfassungseinrichtung 80 abgetastet werden oder indem die Werkzeugspitze gegen einen Messanschlag bekannter Axialposition bewegt wird und lediglich der Referenzpunkt des Werkzeughalters 12 mittels der Positionserfassungseinrichtung 80 abgetastet wird. Die Messung der Gesamtlänge und gegebenenfalls das anschließende Ausschrumpfen und erneute Einschrumpfen des Werkzeugs 10 können insbesondere vollautomatisch ohne Intervention des Bedienungspersonals ablaufen, sofern eine den Betrieb des Schrumpfgeräts steuernde Steuereinheit entsprechend programmiert ist.

Um aus dem Werkzeughalter 12 ein Werkzeug 10 auszuspannen, wird der Werkzeughalter 12 in eines der Induktionsheizelemente 52 der Heizeinheit 48 eingefahren und darin erwärmt. Das Werkzeug 10 kann dann entweder durch das betreffende Induktionsheizelement 52 hindurch aus dem Werkzeughalter 12 herausgezogen werden, oder es kann der erhitzte und gedehnte Werkzeughalter 12 zusammen mit dem Werkzeug 10 aus dem Induktionsheizelement 52 herausgefahren und daraufhin das Werkzeug 10 entnommen werden. Zur Kühlung wird anschließend noch der Werkzeughalter 12 alleine in eines der Kühlelemente 70 der Kühleinheit 66 eingefahren.

Bei einer einfachen Ausführungsform kann es Aufgabe einer Bedienungsperson sein, den Werkzeughalter 12 manuell in die Aufnahmeeinheit 24 einzusetzen und aus dieser zu entnehmen. Gleichfalls kann die Bedienungsperson auch das Werkzeug 10 manuell auf den Auflagetisch 38 legen müssen und es beim Auspannen mit der Hand aus dem Werkzeughalter 12 herausnehmen müssen.

Besteht dagegen das Bestreben, den Betrieb des Schrumpfgeräts so weit es geht zu automatisieren, kann ein automatisches Zufuhr- und Entnahmesystem vorgesehen sein, das der Aufnahmeeinheit 24 leere oder mit einem Werkzeug bestückte Werkzeughalter 12 zuführen und darin einsetzen kann und umgekehrt die Werkzeughalter 12 auch wieder aus der Aufnahmeinheit 24 entnehmen kann. Ein solches Zufuhr- und Entnahmesystem wird zweckmäßigerweise zugleich eine automatische Zufuhr von Werkzeugen 10 zu der Positionierhalterungseinheit 36 sowie eine automatische Entnahme und den automatischen Abtransport ausgespannter Werkzeuge leisten können. Beispielsweise kann das Zufuhr- und Entnahmesystem die leeren Werkzeughalter und die einzuspannenden Werkzeuge aus einem Magazin entnehmen, wo eine Vielzahl gleicher oder/und unterschiedlicher Werkzeughalter und Werkzeuge bereitgehalten werden. Wurden Werkzeughalter in dem Schrumpfgerät mit einem Werkzeug bestückt, so kann das Zufuhrund Entnahmesystem diese bestückten Werkzeughalter beispielsweise an einer Übergabestelle ablegen, von wo sie vom Bedienungspersonal ihrer weiteren Verwendung zugeführt werden können.

Zur Realisierung eines automatischen Zufuhr- und Entnahmesystems kann beispielsweise ein in Fig. 1 bei 89 angedeuteter Handhabungsroboter verwendet werden, der die Werkzeughalter oder/und Werkzeuge mit einem oder mehreren Greifarmen 91 greifen und befördern kann. Der An- und Abtransport kann statt mit einem robotischen Greifsystem beispielsweise auch mit einem gurt- oder kettenartigen Fördermittel erfolgen, an dem Taschen oder andere Aufnahmen angebracht sind, in denen die Werkzeughalter oder/und Werkzeuge stecken. Vorstellbar sind beispielsweise auch Lösungen mit einem Drehteller.

Das erfindungsgemäße Schrumpfgerät kann durch eine Auswuchtfunktion erweitert werden, mittels der eine etwaige Unwucht des Werkzeughalters gemessen und durch Anbringung von Wuchtgewichten ausgeglichen werden kann. Zu diesem Zweck ist bei dem Ausführungsbeispiel der Fig. 1 der Schlitten 32 als Spindelstock ausgeführt, in dem eine gestrichelt angedeutete Spindel 90 gleichachsig zur Werkzeughalterachse 16 um ihre Spindelachse 92 drehbar gelagert ist. Die insbesondere als Hohlspindel ausgeführte Spindel 90 ist drehfest mit der Aufnahmeeinheit 24 gekoppelt, so dass sich bei Rotation der Spindel 90 der in der Aufnahmeeinheit 24 drehfest eingespannte Werkzeughalter 12 mitdreht. Gestrichelt angedeutet ist ferner ein elektrischer Antriebsmotor 94, der ebenfalls in dem Spindelstock 32 untergebracht ist und zum Drehantrieb der Spindel 90 dient. Eine Kraftsensoranordnung 96 erfasst Unwuchtkräfte, die während der Rotation der Spindel 90 auf diese wirken. Aus den von der Kraftsensoranordnung 96 gelieferten Signalen ermittelt eine nicht näher dargestellte elektronische Auswerteeinheit die Unwucht des Werkzeughalters 12 nach Größe und Richtung und zeigt die entsprechenden Informationen auf einem ebenfalls nicht näher dargestellten Display an.

Für die Erweiterung des Schrumpfgeräts zu einem kombinierten Auswucht-Schrumpf-Gerät können in dem Spindelstock 32 insbesondere technische Details realisiert sein, wie sie in WO 00/45983 oder/und DE 199 61 451 A1 beschrieben sind.

Vielfach ist es erwünscht, dass das Werkzeug derart in den Werkzeughalter eingeschrumpft wird, dass die Gesamtlänge des Werkzeughalters einen vorbestimmten Wert hat. Hierzu weisen manche Werkzeughalter eine in ihrer Aufnahmeöffnung angeordnete Voreinstellschraube 98 (siehe Fig. 6) auf, die einen axial justierbaren Anschlag für den Schaft des einzuspannenden Werkzeugs bildet und beim Einschrumpfen die Eindringtiefe des Werkzeugschafts in der Aufnahmeöffnung des Werkzeughalters festlegt. Durch Verdrehen mit einem im Normalfall vom werkzeugseitigen Ende des Werkzeughalters her in die Aufnahmeöffnung eingeführten Schraubwerkzeug, üblicherweise einem Inbusschlüssel, ist die Voreinstellschraube 98 axial justierbar.

Bei dem Schrumpfgerät der Fig. 1 ist ein solches Schraubwerkzeug an einem Schwenkarm 100 gehalten, welcher entlang des Verfahrwegs des Spindelstocks 32 um eine zur Schienenlängsrichtung parallele Schwenkachse 102 vorzugsweise mit Hilfe eines motorischen Antriebs verschwenkbar an der Grundplatte 28 montiert ist. Der Schwenkarm 100 ist in Schienenlängsrichtung stationär an der Grundplatte 28 angebracht. Es ist freilich nicht ausgeschlossen, eine axiale Verstellmöglichkeit für den Schwenkarm vorzusehen. An dem Schwenkarm 100 ist das Schraubwerkzeug (hier mit 104 bezeichnet) aus einer Position, in der es sich außerhalb des Verfahrwegs des Spindelstocks 32 befindet und der Spindelstock 32 so ungehindert an dem Schraubwerkzeug 104 und dem Schwenkarm 100 vorbeifahren kann, in eine Position einschwenkbar, in der es in Flucht mit der Voreinstellschraube 98 des Werkzeughalters 12 ist. Zur Justierung der Voreinstellschraube 98 genügt es dann, wenn der Spindelstock 32 axial an das Schraubwerkzeug 104 heranfährt, so dass Letzteres in Eingriff mit der Voreinstellschraube 98 gelangt, und anschließend der Antriebsmotor 94 in der gewünschten Drehrichtung aktiviert wird. Die Voreinstellschraube 98 wird durch das Schraubwerkzeug 104 daran gehindert, sich mit dem Werkzeughalter 12 mitzudrehen, und verlagert sich deshalb axial in dem Werkzeughalter 12. Um der axialen Bewegung der Voreinstellschraube 98 folgen zu können, ist das Schraubwerkzeug 104 durch eine Vorspannfeder 106 in Richtung zu der Voreinstellschraube 98 hin vorgespannt. Auf diese Weise wird sichergestellt, dass trotz der Stationarität des Schwenkarms 100 der Eingriff zwischen der Voreinstellschraube 98 und dem Schraubwerkzeug 104 nicht verloren geht. Es versteht sich, dass gegebenenfalls auch das Schraubwerkzeug 104 durch einen zusätzlichen Motor rotierend angetrieben sein kann. Gegebenenfalls unter Zuhilfenahme der Positionserfassungseinrichtung 80 kann die Voreinstellschraube 98 auf eine gewünschte Axialposition relativ zu dem vorbestimmten Referenzpunkt des Werkzeughalters 12 oder einer sonstigen in definierter Position relativ zu dem vorbestimmten Referenzpunkt stehenden Fläche des Werkzeughalters 12 eingestellt werden.

Unterschiedliche Werkzeughalter 12 können unterschiedliche Voreinstellschrauben 98 aufweisen, die sich durch die Größe oder/und Form ihrer Angriffsformationen für das Schraubwerkzeug, im Fall von Inbusschrauben beispielsweise durch den Durchmesser ihrer Innensechskantöffnung, voneinander unterscheiden. Verschiedene Werkzeughalter 12 können deshalb verschiedene Schraubwerkzeuge 104 erfordern. Diesbezüglich besteht die Möglichkeit, dass das Schraubwerkzeug 104 betriebsmäßig auswechselbar in einem am freien Ende des Schwenkarms 100 angeordneten Haltekopf 107 aufgenommen ist und bei Bedarf gegen ein anderes Schraubwerkzeug ausgetauscht werden kann. Es besteht aber auch die Möglichkeit, den Haltekopf 107 nach Art eines Revolvers mit mehreren Schraubwerkzeugen zu bestücken, die wahlweise zum Einsatz gebracht werden können. Eine weitere Möglichkeit besteht darin, ein Schraubwerkzeug 104 zu verwenden, das so gestaltet ist, dass es zur Betätigung von Voreinstellschrauben 98 mit unterschiedlich großen Angriffsformationen, beispielsweise unterschiedlich großen Innensechskantöffnungen, geeignet ist.

Um eine exakte Justierung der Voreinstellsschraube 98 des Werkzeughalters 12 zu gewährleisten, sollte günstigerweise der Verstellweg der Voreinstellschraube 98 gemessen werden können, wenn diese mittels des Schraubwerkzeugs 104 verstellt wird. Hierzu kann dem Schraubwerkzeug 104 an dem Haltekopf 107 ein Längenmesssystem zugeordnet sein, mittels dessen die axiale Auslenkung des Schraubwerkzeugs 104 bei Verstellung der Voreinstellschraube 98 gemessen werden kann. Diese Auslenkung des Schraubwerkzeugs 104 entspricht dem Verstellweg der Voreinstellschraube 98.

Es wurde bis jetzt davon ausgegangen, dass die Justierung der Voreinstellschraube 98 von der in Figur 1 rechten Seite des Werkzeughalters 12 her erfolgt, also sozusagen von vorne. Grundsätzlich ist es aber auch möglich, dass die Voreinstellschraube 98 von der Seite des Kupplungsschafts 14 des Werkzeughalters 12 her verstellbar ist, sozusagen von hinten. In einem solchen Fall kann der Schwenkarm 100 mit dem Haltekopf 107 hinter dem Schlitten 32 an der Tragbasis 28 angebracht sein. Um dann den Verstellweg der Voreinstellschraube 98 messen zu können, kann von vorne ein nicht näher dargestellter Taster in die Aufnahmeöffnung 20 des Werkzeughalters 12 hineinreichen und die axiale Position der Voreinstellschraube 98 erfassen. Ein solcher Taster kann an dem Schlitten 32 oder an der Tragbasis 28 angebracht sein.

Bei der nachfolgenden Erläuterung der Fig. 3 bis 5 werden, soweit es sich um gleiche oder gleichwirkende Komponenten wie zuvor handelt, gleiche Bezugszeichen wie in den Fig. 1, 2 und 6 verwendet, wobei jedoch zur Unterscheidung ein Kleinbuchstabe angehängt wird. Es wird zur Erläuterung dieser Komponenten auf die vorangehenden Ausführungen verwiesen, soweit sich aus dem Nachfolgenden nichts anderes ergibt.

Fig. 3 zeigt eine Variante mit einem Schienensystem 30a, das unter einem kleinen spitzen Winkel schräg zur Horizontalen verläuft, wobei das Schienensystem 30a zum Schlitten 34a hin abfällt. Die Schräge des Schienensystems 30a kann bewirken, dass das Werkzeug 10a, nachdem es in die Auflagerinne 40a gelegt wurde, in der Rinne 40a herabrutscht. Um zu verhindern, dass es zu weit zurückrutscht, kann ein Positionieranschlag 108a vorgesehen sein, der das Werkzeug 10a axial positionieren kann. Ein solcher Positionieranschlag kann im übrigen auch bei einem horizontalen Schrumpfgerät vorgesehen sein, wie es in Fig. 1 dargestellt ist.

Bei dem Schrumpfgerät der Fig. 1 ermöglicht die Vorsehung eines festen Positionieranschlags am Schlitten 34 zudem die Vermessung der Länge des Werkzeugs 10, indem dieses mit seiner schaftfernen Werkzeugspitze an den Positionieranschlag angelegt wird, und das schaftseitige Ende mittels der Positionserfassungseinrichtung 80 abgetastet wird. Es muss dann nicht die Länge des Werkzeugs 10 von einer Bedienungsperson manuell in eine Bedieneinheit eingegeben werden; vielmehr kann das Schrumpfgerät eine automatische Längenmessung des Werkzeugs 10 vornehmen.

Als Alternative zu einem losen Einlegen des Werkzeugs in eine nach oben offene Positionierrinne zeigt Fig. 4 eine beispielhafte Klemmhalterung 110b mit zwei prismatischen Klemmbacken 112b, die das Werkzeug 10b von gegenüberliegenden Seiten her radial zwischen sich einklemmen können. Es versteht sich, dass die Klemmbacken 112b alternativ auch gerundete Bakkenoberflächen aufweisen können und dass die Klemmhalterung 110b gewünschtenfalls auch mehr als zwei von verschiedenen Seiten her an dem Werkzeug 10b angreifende Klemmbacken aufweisen kann, besipielsweise drei oder vier Klemmbacken. Ebenso versteht es sich, dass eine solche Klemmhalterung mit Klemmbacken grundsätzlich bei Schrumpfgeräten mit beliebiger Ausrichtung des Schienensystems einsetzbar ist.

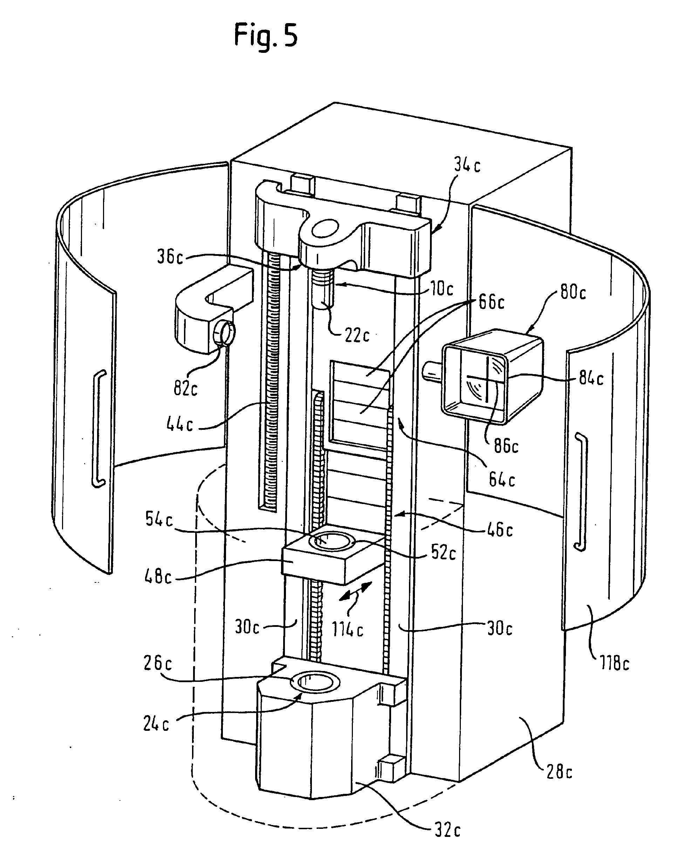

Fig. 5 schließlich zeigt eine Variante, bei der das Schrumpfgerät als vertikale Einheit mit obenliegendem Schlitten 34c und untenliegendem Schlitten 32c ausgeführt ist und die Führungsschienen 30c dementsprechend vertikal verlaufen. Im Unterschied zu dem Schrumpfgerät der Fig. 1 umfasst bei diesem Ausführungsbeispiel die Heizvorrichtung 46c eine Gruppe von Heizeinheiten 48c, die in Achsrichtung bzw. in Schienenlängsrichtung hintereinander angeordnet sind und jeweils nur mit einem einzigen Induktionsheizelement 52c bestückt sind. Diese Heizeinheiten 48c, von denen im Beispielfall der Fig. 5 vier vorgesehen sind, die jedoch grundsätzlich auch in jeder beliebigen anderen Anzahl (auch Eins) vorhanden sein können, sind als Schiebelemente ausgeführt, welche orthogonal zur Schienenlängsrichtung geradlinig verschiebbar an der Tragbasis 28c angeordnet sind, wie durch einen Doppelpfeil 114c angedeutet.

Die Tragbasis 28c kann ein Unterbringungsgehäuse für die Heizeinheiten 48c bilden, aus dem die Heizeinheiten 48c nach Art von Schubladen herausgefahren werden können, wenn sie zur Erwärmung des Werkzeughalters benötigt werden, und in das sie geschützt eingefahren sind, wenn sie nicht benötigt werden. In ihrer ausgefahrenen Stellung sind die Heizeinheiten 48c soweit in den Verfahrweg des Schlittens 32c hineinbewegt, dass der Werkzeughalter in das jeweilige Induktionsheizelement 52c einfahren kann. In ihrer eingefahrenen Stellung sind die Heizeinheiten 48c soweit aus dem Verfahrweg des Schlittens 32c herausbewegt, dass der Schlitten 32c an der jeweiligen Heizeinheit 48c ungestört vorbeifahren kann. Um den Betrieb des Schrumpfgeräts automatisieren zu können, ist bevorzugt jeder der Heizeinheiten 48c ein eigener motorischer Antrieb zugeordnet, mittels dessen die jeweilige Heizeinheit 48c unabhängig von den anderen Heizeinheiten 48c verfahrbar ist.

Analog zur Heizvorrichtung 46c umfasst auch die Kühlvorrichtung 64c eine Gruppe von hier vier axial hintereinander angeordneten Kühleinheiten 66c, die ebenfalls als Schiebeelemente ausgebildet sind und jeweils mit einem einzigen Kühlelement bestückt sind. Die Gruppe von Heizeinheiten 48c und die Gruppe von Kühleinheiten 66c sind in Schienenlängsrichtung hintereinander angeordnet, wobei es freilich alternativ denkbar ist, sie einander beidseits des Verfahrwegs des Schlittens 32c gegenüberliegend anzuordnen.

Die Positionierhalterung 36c für das Werkzeug 10c kann beispielsweise als Klemmhalterung ausgebildet sein, wie sie zuvor in Bezug auf Fig. 4 erläutert wurde. Denkbar ist zur Halterung des Werkzeugs 10c beispielsweise auch eine längsgeschlitzte Hülse, in die das Werkzeug 10c einsteckbar ist. Aber auch beliebige andere Klemmvorrichtungen sind möglich.

Zu allen vorstehend erläuterten Ausführungsbeispielen seien folgende Anmerkungen nachgetragen. Die der Positionierung des Werkzeugs dienende Positionierhalterungseinheit 36, 36a, 36b oder 36c kann in mindestens einer Radialrichtung schwimmend gelagert sein, so dass sie radial in einem bestimmten Bereich beweglich ist. Dies ermöglicht es, etwaige Fluchtungsfehler auszugleichen, die beim Einführen des Werkzeugschafts in den Werkzeughalter zwischen diesen beiden Komponenten bestehen können. Beispielsweise kann die Positionierhalterungseinheit gegen eine sie radial zentrierende Federkraft elastisch auslenkbar sein.

Bisher wurde stets von einem optischen Positionserfassungssystem für die Positionserfassung und gegebenenfalls Längenmessung des Werkzeugs ausgegangen. Selbstverständlich kann statt eines optischen Positionserfassungssystems auch ein mechanisches Positionserfassungssystem realisiert werden. Bei Betrachtung des Schrumpfgeräts der Fig. 1 kann beispielsweise am Haltekopf 107 axial dem Schraubwerkzeug 104 gegenüberliegend ein nicht näher dargestellter mechanischer Taster angebracht werden. Zur Positionserfassung des Werkzeugs 10 werden der Schwenkarm 100 hereingeschwenkt und der Schlitten 34 mit dem Werkzeug 10 an den Taster herangefahren. Der Taster kann mit einem langen Messbereich von beispielsweise etwa 30 mm ausgeführt sein. In diesem Fall muss das Werkzeug 10 nicht exakt auf Anschlag mit dem Taster gefahren werden. Es muss lediglich den Taster um einen beliebigen Betrag auslenken. Aus dem Betrag der Auslenkung des Tasters kann dann die axiale Position der schaftseitigen Stirnseite des Werkzeugs 10 ermittelt und hieraus die Länge des Werkzeugs 10 berechnet werden. Es versteht sich, dass bei einer solchen mechanischen Positionserfassung des Werkzeugs 10 letzteres mittels eines axialen Positionieranschlags oder geeigneter Klemmmittel gegen axiales Verrutschen zumindest in Richtung weg vom Werkzeughalter 12 gesichert sein wird.

Des Weiteren wurde bisher davon ausgegangen, dass das Schrumpfgerät zur Anpassung an unterschiedliche Größen von Werkzeughaltern mit unterschiedlich großen Induktionsheizelementen und unterschiedlich großen Kühlelementen bestückt ist. Es ist freilich auch der Einsatz eines größenveränderlichen Induktionsheizelements und eines größenveränderlichen Kühlelements denkbar. Größenveränderlich heißt hierbei, dass der Durchmesser des zentralen Innenraums des Induktionsheizelements bzw. des Kühlelements an die Größe des jeweiligen Werkzeughalters anpassbar ist. Insbesondere ist es denkbar, dass die Größenanpassung des Induktionsheizelements und des Kühlelements automatisch mittels geeigneter Stellmittel erfolgen können, wenngleich eine manuelle Größenanpassung nicht ausgeschlossen ist. Bei Verwendung derartiger größenanpassbarer Temperierelemente kann ein Schrumpfgerät realisiert werden, das mit einem einzigen Induktionsheizelement und einem einzigen Kühlelement auskommt und dennoch eine große Einsatzbreite besitzt.

In Fig. 1 kann die Spindel 90 von Kühlwasser oder einer anderen Kühlflüssigkeit umströmt sein, um sie auf konstanter Temperatur zu halten. Auf diese Weise kann erreicht werden, dass sich die Spindel 90 nach mehreren aufeinanderfolgenden Schrumpfvorgängen nicht erwärmt und durch thermische Ausdehnung die Längenmessung an der Einheit aus Werkzeughalter 12 und eingeschrumpftem Werkzeug 10 beeinflusst.

Außerdem kann in dem erfindungsgemäßen Schrumpfgerät eine Überwachungsfunktion für die Temperatur des Werkzeughalters implementiert sein. In Fig. 1 ist hierzu ein Temperatursensor 114 angedeutet, der über einen Trägerarm 116 an dem Schlitten 32 gehalten ist und die Temperatur des Bereichs der Aufnahmeöffnung 20 des Werkzeughalters 12 misst. Der Temperatursensor 114 kann beispielsweise ein optischer Temperaturfühler oder ein Kontaktmessfühler sein. Er liefert sein Sensorsignal an eine nicht näher dargestellte elektronische Steuereinheit des Schrumpfgeräts. Um zu verhindern, dass sich das Bedienungspersonal durch Kontakt mit heißen Teilen Brandverletzungen zuzieht, kann die Steuereinheit dazu programmiert sein, eine vorbestimmte Warn- oder/und Schutzreaktion zu bewirken, so lange die Temperatur des Werkzeughalters 12 über einer vorbestimmten Temperaturschwelle liegt. So kann die Steuereinheit beispielsweise das Öffnen einer in Fig. 5 bei 118c angedeuteten Schutzhaube erst dann gestatten, wenn die Temperatur des Werkzeughalters 12 unter die Temperaturschwelle gefallen ist. Alternativ oder zusätzlich kann die Steuereinheit die Abgabe eines optischen oder/und akustischen Warnsignals bewirken, wenn die Temperatur des Werkzeughalters 12 noch über der Temperaturschwelle liegt. Alternativ oder zusätzlich ist es möglich, dass die Steuereinheit die Abgabe eines optischen oder/und akustischen Freigabesignals bewirkt, wenn die Temperatur des Werkzeughalters 12 unter die Temperaturschwelle gesunken ist.

Bei der Längenmessung an der Einheit aus Werkzeughalter 12 und eingeschrumpftem Werkzeug 10 ist es wichtig, die Gesamtlänge dieser Einheit im kalten Zustand zu erfahren. Für den Anwender kann es jedoch zu lange dauern, mit der Messung der Gesamtlänge dieser Einheit so lange zu warten, bis die vollständige Abkühlung des Werkzeughalters auf Umgebungstemperatur eingetreten ist. Die Erfassung der Temperatur des Werkzeughalters 12 mittels des Temperatursensors 14 ermöglicht es nun, eine solche lange Wartepause zu vermeiden. Wenn nämlich die Temperatur des Werkzeughalters 12 bekannt ist, kann bei der Längenmessung die erwärmungsbedingte Längenausdehnung des Werkzeughalters 12 rechnerisch kompensiert werden, so dass die Vermessung der Einheit aus Werkzeughalter 12 und Werkzeug 10 schon dann erfolgen kann, wenn der Werkzeughalter 12 noch warm ist und gegenüber seinem kalten Zustand gedehnt ist.

Um bei verschiedenen Schrumpfvorgängen an gleichartigen Werkzeughaltern 12 stets eine gleiche Längenausdehnung zu erzielen, kann darüber hinaus der Schrumpfvorgang überwacht werden. Beispielsweise kann jeder Schrumpfvorgang mit der gleichen Energiemenge durchgeführt werden. Hierzu kann beispielsweise die Temperatur des Werkzeughalters 12 permanent überwacht und die Stromspeisung der für die Erwärmung des Werkzeughalters 12 verwendeten Induktionsspule abhängig von der erfassten Temperatur des Werkzeughalters 12 gesteuert werden.

Es ist wünschenswert, dass das schaftferne Ende des Werkzeugs 10 im kalten Zustand des Werkzeughalters eine vorbestimmte Position relativ zu dem vorstehend erwähnten vorbestimmten Referenzpunkt des Werkzeughalters 12 hat. Die Abweichungstoleranzen sollen hierbei möglichst gering sein. Üblicherweise liegt der Referenzpunkt auf der Seite des Kupplungsschafts 14 des Werkzeughalters und ist deshalb während des Schrumpfvorgangs für Messungen nur indirekt zugänglich, während der für direkte Messungen zugängliche hülsenförmige Werkzeugaufnahmebereich 18 sich während der Wärmedehnungsphase nicht nur aufweitet, sondern auch axial sich verlängert. Werden Flächen an diesem Bereich während der Wärmedehnungsphase zur Längenmessung herangezogen, so führt dies zu vergleichsweise großen Messtoleranzen, selbst wenn versucht wird, die axiale Wärmedehnung rechnerisch zu korrigieren.

Soweit der Werkzeughalter 12 eine Voreinstellschraube 98 aufweist, wie dies anhand von Fig. 6 vorstehend erläutert wurde, so kann die Position der Voreinstellschraube 98 vor der Wärmedehnungsphase, d.h. bei kaltem Werkzeughalter 12, entsprechend der Länge des kalten Werkzeugs 10 justiert werden. Die Toleranzen des eingeschrumpften Werkzeugs relativ zum Referenzpunkt des Werkzeughalters 12 werden deshalb nicht durch Wärmedehnungsfehler beeinflusst. Allerdings setzt diese Voreinstelltechnik Werkzeughalter mit Voreinstellschraube voraus und auch der Voreinstellvorgang ist vergleichsweise aufwändig, da die innerhalb des Werkzeughalters 12 gelegene Voreinstellschraube 98 justiert und vermessen werden muss.

Die Voreinstellschraube 98 des Werkzeughalters 12 kann jedoch entfallen bzw. muss nicht mehr justiert werden, wenn das Werkzeug 10, wie anhand der Fig. 7 erläutert, in den Werkzeughalter 12 positioniert eingeschrumpft wird. Fig. 7 zeigt einen Werkzeughalter, der zwischen seinem vorbestimmten Bezugs- bzw. Referenzpunkt 120, hier festgelegt durch einen vorbestimmten Durchmesser seines Kupplungsschafts 14 und seiner achsnormalen Stirnfläche 122 am werkzeugseitigen Ende seines die Aufnahmeöffnung 20 enthaltenden Aufnahmebereichs 18 in kaltem Zustand ein axiales Längenmaß A hat. Um das Werkzeug 10 in den Werkzeughalter 12 so einzuschrumpfen, dass sich im kalten Zustand eine vorbestimmte Gesamtlänge L zwischen dem Referenzpunkt 120 und der Werkzeugspitze 124 ergibt, muss die Werkzeugspitze 124 von der Stirnfläche 122 im kalten Zustand einen axialen Abstand B haben. Die Länge B kann auch während der Wärmedehnungsphase des Einschrumpfens mit geringen Toleranzen gemessen werden, da sich während der Wärmedehnungsphase zwar die Länge A ändert, indem sich die Stirnfläche 122 relativ zum Referenzpunkt 120 axial bewegt, nicht jedoch das absolute Maß der Länge B, soweit dieses Maß von der wärmegedehnten Position der Stirnfläche 122 aus bestimmt wird. Das Maß der Länge B kann aus der gewünschten Gesamtlänge L abzüglich des an dem kalten Werkzeughalter 12 messbaren Längenmaßes A errechnet werden und während der Wärmedehnungsphase des Schrumpfvorgangs zur Steuerung der Einschublänge beim Einführen des Werkzeugschafts 22 in die Aufnahmeöffnung 20 ausgenutzt werden.

In einer bevorzugten Ausgestaltung der vorstehend erläuterten Schrumpfvorrichtungen ist vorgesehen, dass mittels der Positionserfassungseinrichtung 80 das Maß B während der Wärmedehnungsphase bezogen auf die wärmegedehnte Axialposition der Stirnfläche 122 überwacht wird. Nach der Ermittlung der momentanen, wärmegedehnten Position der Stirnfläche 122 wird mittels des Schlittens 34 das Werkzeug 10 so weit in die Aufnahmeöffnung 20 eingeführt, bis die Werkzeugspitze 124 den Abstand B von der Stirnfläche 122 hat. Während der Einschubbewegung kann die Positionserfassungseinrichtung die momentane Lage der Werkzeugspitze 124 überwachen oder aber, soweit der Schlitten 34 mittels eines geregelten Positionierantriebs bewegt wird, so kann die Steuerung dieses Positionierantriebs den Schlitten 34 relativ zu der von der Positionserfassungseinrichtung 80 mit Bezug auf die Basis 28 ermittelten, wärmegedehnten Position der Stirnfläche 122 auf das Maß B einstellen.

Um das vorstehend erläuterte Einstellverfahren durchführen zu können, genügt es, wenn der Werkzeughalter 12 und das Werkzeug 10 relativ zueinander bewegbar sind. Hierzu müssen nicht, wie es vorangegangen erläutert wurde, sowohl der Werkzeughalter 12 auf einem Schlitten 32 als auch das Werkzeug 10 mittels eines Schlittens 34 bewegbar sein; es genügt, wenn eine dieser Komponenten an einem Schlitten gehalten ist. Die Relativvorschubbewegung kann manuell bei gleichzeitiger Überwachung durch ein Längenmessgerät erfolgen; sie kann auch automatisiert durch Positionierantriebe erfolgen. Die Voreinstellmethode kann deshalb auch bei anderen als den vorstehend erläuterten erfindungsgemäßen Schrumpfvorrichtungen eingesetzt werden. Die Positioniererfassungseinrichtung kann wie vorangegangen erläutert ausgebildet sein; geeignet sind aber auch mechanisch abtastende Längenmessgeräte. Die Positionierhalterungseinheit muss in ihrer einfachsten Form nicht notwendigerweise das Rotationswerkzeug fixiert halten. Es genügt, wenn die Positionierhalterungseinheit einen auf das Maß B relativ zur wärmegedehnten Stirnfläche 122 einstellbaren Axialanschlag für die Werkzeugspitze 124 hat, so dass das Werkzeug 10 ggf. manuell nach dem Einsetzen in die Aufnahmeöffnung 20 gegen diesen Anschlag gezogen wird. Auch die Einstellung des Anschlags auf das Maß B kann ggf. unter Zuhilfenahme eines herkömmlichen Längenmessgeräts manuell während des Einschrumpfens erfolgen.

## Patentansprüche

1. Schrumpfvorrichtung für einen ein Rotationswerkzeug (10) im Presssitz in einer zentrischen Aufnahmeöffnung (20) haltenden Werkzeughalter (12), mit einer Aufnahmeeinheit (24) zur Aufnahme des Werkzeughalters und einer Temperiervorrichtung (46, 64) zumindest zur Wärmedehnung, insbesondere auch zur anschließenden Kühlung des Werkzeughalters im Bereich der Aufnahmeöffnung,
**dadurch gekennzeichnet, dass** die Aufnahmeeinheit an einem Schlitten (32) angeordnet ist, welcher auf einem zur Achse (16) des in der Aufnahmeeinheit aufgenommenen Werkzeughalters parallel verlaufenden, auf einer Tragbasis (28) befestigten Schienensystem (30) in Schienenlängsrichtung verfahrbar geführt ist und entlang seines Verfahrwegs in einen Einwirkbereich der Temperiervorrichtung bewegbar ist, und dass eine das Werkzeug (10) zu dessen Einführung in die Aufnahmeöffnung (20) des Werkzeughalters (12) relativ zu dieser radial positioniert haltende Positionierhalterungseinheit (36) vorgesehen ist.

2. Vorrichtung nach Anspruch 1,
**dadurch gekennzeichnet, dass** der Schlitten (32) zur Erwärmung und zur Kühlung des Werkzeughalters (12) an verschiedene Axialpositionen entlang des Schienensystems (30) zu bewegen ist.

3. Vorrichtung nach Anspruch 1,
**dadurch gekennzeichnet, dass** die Erwärmung und die Kühlung des Werkzeughalters durch die Temperiervorrichtung an einer gleichen Axialposition des Schlittens bewirkbar sind.

4. Vorrichtung nach einem der Ansprüche 1 bis 3,
**dadurch gekennzeichnet, dass** die Temperiervorrichtung (46, 64) mindestens eine Temperiereinheit (48, 66) umfasst, welche quer, insbesondere in einer Orthogonalebene zur Schienenlängsrichtung zwischen mindestens einer vorgerückten Stellung, in der die Temperiereinheit in den Verfahrweg des Schlittens (32) hineinbewegt ist und ein Temperierelement (52, 70) der Temperiereinheit in eine das Einfahren des Werkzeughalters (12) in eine Durchtrittsöffnung (54, 72) des Temperierelements (52, 70) ermöglichende Einwirkstellung gebracht oder bringbar ist, und einer zurückgezogenen Stellung, in der die Temperiereinheit aus dem Verfahrweg des Schlittens herausbewegt ist, verstellbar geführt an der Tragbasis (28) angeordnet ist.

5. Vorrichtung nach Anspruch 4,
**dadurch gekennzeichnet, dass** das Temperierelement (52) eine für die Erwärmung den Bereich der Aufnahmeöffnung (20) des Werkzeughalters (12) in radialem Abstand ringförmig umschließende Induktionsspule aufweist.

6. Vorrichtung nach Anspruch 4 oder 5,
**dadurch gekennzeichnet, dass** das Temperierelement (70) eine von Kühlflüssigkeit durchströmbare, für die Kühlung auf den Werkzeughalter (12) in Berührungskontakt aufsetzbare Kühlmanschette aufweist.

7. Vorrichtung nach einem der Ansprüche 4 bis 6,
**dadurch gekennzeichnet, dass** das Temperierelement wahlweise kühlend oder erwärmend betreibbar ist.

8. Vorrichtung nach einem der Ansprüche 4 bis 7,
**dadurch gekennzeichnet, dass** die Temperiereinheit (48, 66) in Schienenlängsrichtung stationär an der Tragbasis (28) angebracht ist.

9. Vorrichtung nach einem der Ansprüche 4 bis 7,
**dadurch gekennzeichnet, dass** die Temperiereinheit in Schienenlängsrichtung verstellbar, jedoch arretierbar an der Tragbasis angeordnet ist.

10. Vorrichtung nach einem der Ansprüche 4 bis 9,
**dadurch gekennzeichnet, dass** die Temperiereinheit (48, 66) in ihrer zurückgezogenen Stellung geschützt in einen Unterbringungsraum eingefahren ist, aus dem sie zum Erreichen ihrer vorgerückten Stellung ausfahrbar ist.

11. Vorrichtung nach einem der Ansprüche 4 bis 10,
**dadurch gekennzeichnet, dass** die Temperiereinheit (48c, 66c) zwischen ihrer zurückgezogenen und ihrer vorgerückten Stellung wenigstens zum Teil linearbeweglich geführt ist.

12. Vorrichtung nach einem der Ansprüche 4 bis 11,
**dadurch gekennzeichnet, dass** die Temperiereinheit (48, 66) zwischen ihrer zurückgezogenen und ihrer vorgerückten Stellung wenigstens zum Teil schwenkbeweglich geführt ist.

13. Vorrichtung nach einem der Ansprüche 4 bis 12,
**dadurch gekennzeichnet, dass** die Temperiereinheit (48c, 66c). mit einem einzigen Temperierelement (52c) bestückt oder bestückbar ist.

14. Vorrichtung nach Anspruch 13,
**dadurch gekennzeichnet, dass** das Temperierelement hinsichtlich der Größe seiner Durchtrittsöffnung an unterschiedliche Werkzeughalter anpassbar ist.

15. Vorrichtung nach einem der Ansprüche 4 bis 12,
**dadurch gekennzeichnet, dass** die Temperiereinheit (48, 66) mit mehreren wahlweise jeweils einzeln in Einwirkstellung relativ zum Werkzeughalter (12) bringbaren Temperierelementen (52, 70) bestückt oder bestückbar ist.

16. Vorrichtung nach Anspruch 15,
**dadurch gekennzeichnet, dass** die Temperiereinheit (48, 66) einen um seine Tellerachse (56, 74) drehbar gehaltenen Revolverteller (50, 68) umfasst, an dem die Temperierelemente (52, 70) in Umfangsrichtung verteilt angeordnet sind.

17. Vorrichtung nach Anspruch 16,
**dadurch gekennzeichnet, dass** der Revolverteller (50, 68) an einem Schwenkarm (58, 76) in und aus dem Verfahrweg des Schlittens (32) schwenkbar angebracht ist.

18. Vorrichtung nach einem der Ansprüche 4 bis 17,
**dadurch gekennzeichnet, dass** das Temperierelement (52, 70) betriebsmäßig auswechselbar an der Temperiereinheit (48, 66) angeordnet ist.

19. Vorrichtung nach einem der Ansprüche 4 bis 18,
**dadurch gekennzeichnet, dass** die Temperiervorrichtung (46, 64) eine Mehrzahl von mindestens zwei unabhängig voneinander verstellbar geführten Temperiereinheiten (48, 66) umfasst.

20. Vorrichtung nach Anspruch 19,
**dadurch gekennzeichnet, dass** wenigstens eine Teilanzahl der Temperiereinheiten (48, 66) in Schienenlängsrichtung hintereinander angeordnet ist.

21. Vorrichtung nach Anspruch 19 oder 20,
**dadurch gekennzeichnet, dass** wenigstens eine Teilanzahl der Temperiereinheiten einander quer zur Schienenlängsrichtung gegenüberliegend angeordnet ist.

22. Vorrichtung nach einem der Ansprüche 19 bis 21,
**dadurch gekennzeichnet, dass** die Temperiervorrichtung (46c, 64c) zwei Gruppen von in Schienenlängsrichtung jeweils benachbart hintereinander angeordneten, mit je einen einzigen Temperierelement (52c) bestückten oder bestückbaren Temperiereinheiten (48c, 66c) umfasst, wobei die Temperierelemente der einen Gruppe sämtlich zur Kühlung des Werkzeughalters dienen und die Temperierelemente der anderen Gruppe sämtlich zur Erwärmung des Werkzeughalters dienen.

23. Vorrichtung nach einem der Ansprüche 19 bis 21,
**dadurch gekennzeichnet, dass** die Temperiervorrichtung (46, 64) zwei Temperiereinheiten (48, 66) umfasst, deren jede mit mehreren wahlweise jeweils einzeln in Einwirkstellung relativ zum Werkzeughalter (12) bringbaren Temperierelementen (52, 70) bestückt oder bestückbar sind, wobei die Temperierelemente der einen Temperiereinheit sämtlich zur Kühlung des Werkzeughalters dienen und die Temperierelemente der anderen Temperiereinheit sämtlich zur Erwärmung des Werkzeughalters dienen.

24. Vorrichtung nach einem der Ansprüche 19 bis 23,
**dadurch gekennzeichnet, dass** wenigstens eine der Temperiereinheiten (70) zumindest eine an einen Kühlmittelkreislauf (71) angeschlossene, auf den Werkzeughalter (12) aufsetzbare Kühlmanschette aufweist.

25. Vorrichtung nach Anspruch 24,
**dadurch gekennzeichnet, dass** der Kühlmittelkreislauf als Wärmepumpenkreislauf ausgebildet ist, bei welchem die Kühlmanschette unmittelbar ein Verdampferelement des Wärmepumpenkreislaufs bildet.

26. Vorrichtung nach einem der Ansprüche 1 bis 25,
**dadurch gekennzeichnet, dass** das Schienensystem (30) mit zur Horizontalen im wesentlichen paralleler Schienenlängsrichtung an der Tragbasis (28) befestigt ist.

27. Vorrichtung nach einem der Ansprüche 1 bis 25,
**dadurch gekennzeichnet, dass** das Schienensystem (30a) mit schräg zur Horizontalen, insbesondere unter einem kleinen spitzen Winkel hierzu, verlaufender Schienenlängsrichtung an der Tragbasis (28a) befestigt ist.

28. Vorrichtung nach einem der Ansprüche 1 bis 25,
**dadurch gekennzeichnet, dass** das Schienensystem (30c) mit zur Vertikalen im wesentlichen paralleler Schienenlängsrichtung an der Tragbasis (28c) befestigt ist.

29. Vorrichtung nach einem der Ansprüche 1 bis 28,
**dadurch gekennzeichnet, dass** die Positionierhalterungseinheit in Schienenlängsrichtung stationär angeordnet ist und zur Einführung des Werkzeugs in die Aufnahmeöffnung des Werkzeughalters der Schlitten an die Positionierhalterungseinheit heranfahrbar ist.

30. Vorrichtung nach einem der Ansprüche 1 bis 28,
**dadurch gekennzeichnet, dass** die Positionierhalterungseinheit (36) an einem weiteren auf dem Schienensystem (30) in Schienenlängsrichtung verfahrbar geführten Schlitten (34) angeordnet ist, welcher zur Einführung des Werkzeugs (10) in die Aufnahmeöffnung (20) des Werkzeughalters (12) relativ zum erstgenannten Schlitten (32) auf diesen zu bewegbar ist.

31. Vorrichtung nach Anspruch 30,
**dadurch gekennzeichnet, dass** mindestens eine Führungsschiene (30) des Schienensystems zur gemeinsamen Führung beider Schlitten (32, 34) dient.

32. Vorrichtung nach einem der Ansprüche 1 bis 31,
**dadurch gekennzeichnet, dass** die Positionierhalterungseinheit (36) in mindestens einer achsnormalen Richtung justierbar ist.

33. Vorrichtung nach einem der Ansprüche 1 bis 32,
**dadurch gekennzeichnet, dass** die Positionierhalterungseinheit (36) mit radialem Bewegungsspiel an einem die Positionierhalterungseinheit (36) tragenden Schlitten (34) angebracht ist.

34. Vorrichtung nach einem der Ansprüche 1 bis 33,
**dadurch gekennzeichnet, dass** bei horizontalem oder schräg zur Horizontalen geneigtem Verlauf des Schienensystems (30) die Positionierhalterungseinheit (36) eine nach oben offene, in Schienenlängsrichtung verlaufender Positionierrinne (40) aufweist, in die das Werkzeug (10) einlegbar ist.

35. Vorrichtung nach Anspruch 34,
**dadurch gekennzeichnet, dass** die Positionierrinne (40) prismatisch ausgeführt ist.

36. Vorrichtung nach Anspruch 34 oder 35,
**dadurch gekennzeichnet, dass** der Positionierrinne (40a) eine Anschlagfläche (108a) zur axialen Positionierung des Werkzeugs zugeordnet ist.

37. Vorrichtung nach einem der Ansprüche 1 bis 36,
**dadurch gekennzeichnet, dass** die Positionierhalterungseinheit Klemmmittel (110b) zur radialen Einklemmung des Werkzeugs (10b) umfasst.

38. Vorrichtung nach Anspruch 37,
**dadurch gekennzeichnet, dass** die Klemmmittel (110b) eine Anordnung relativ aufeinander zu bewegbarer Klemmbacken (112b) umfassen, zwischen denen das Werkzeug (10b) einklemmbar ist.

39. Vorrichtung nach Anspruch 38,
**dadurch gekennzeichnet, dass** mindestens einer der Klemmbacken (112b) als Klemmprisma ausgebildet ist.

40. Vorrichtung nach einem der Ansprüche 1 bis 39,
**dadurch gekennzeichnet, dass** an dem die Aufnahmeeinheit (24) tragenden Schlitten (32) eine mit ihrer Spindelachse (92) gleichachsig zu dem in der Aufnahmeeinheit (24) aufgenommenen Werkzeughalter (12) angeordnete, an einem ihrer Enden mit der Aufnahmeeinheit drehfest verbundene oder verbindbare Spindel (90) um ihre Spindelachse drehbar gelagert ist, dass der die Aufnahmeeinheit (24) tragenden Schlitten ferner einen Antriebsmotor (94) zum rotierenden Antrieb der Spindel trägt, dass die Aufnahmeeinheit zur drehfesten Einspannung des Werkzeughalters ausgebildet ist und dass an dem die Aufnahmeeinheit (24) tragenden Schlitten eine Sensoranordnung (96) angeordnet ist, welche die Erfassung während der Rotationsbewegung der Spindel auf diese wirkender Unwuchtkräfte gestattet.

41. Vorrichtung nach Anspruch 40,
**dadurch gekennzeichnet, dass** der Werkzeughalter (12) eine zentrisch in der Aufnahmeöffnung (20) angeordnete, axial justierbare Anschlagschraube (98) für das Werkzeug (10) aufweist und an der Tragbasis (28) eine ein Schraubwerkzeug (104) radial ausgerichtet zu der Anschlagschraube haltende Haltekonstruktion (100) angebracht ist.

42. Vorrichtung nach Anspruch 41,
**dadurch gekennzeichnet, dass** die Haltekonstruktion (100) eine Bewegungsführung umfasst, mittels der das Schraubwerkzeug (104) quer, insbesondere in einer Orthogonalebene zur Schienenlängsrichtung in und aus dem Verfahrweg des die Aufnahmeeinheit (24) tragenden Schlittens (32) bewegbar ist.

43. Vorrichtung nach Anspruch 41 oder 42,
**dadurch gekennzeichnet, dass** die Haltekonstruktion (100) in Schienenlängsrichtung stationär an der Tragbasis (28) angebracht ist.

44. Vorrichtung nach einem der Ansprüche 41 bis 43,
**dadurch gekennzeichnet, dass** das Schraubwerkzeug (104) axial federnd (bei 106) an der Haltekonstruktion (100) abgestützt ist.

45. Vorrichtung nach einem der Ansprüche 1 bis 44,
**gekennzeichnet durch** eine an der Tragbasis (28) angeordnete, insbesondere optische Positionserfassungseinrichtung (80) zur Durchführung von Positionserfassungsaufgaben zumindest an dem in der Positionierhalterungseinheit (36) gehaltenen Werkzeug (10).

46. Vorrichtung nach Anspruch 45,
**dadurch gekennzeichnet, dass** die Positionserfassungseinrichtung (80) in Schienenlängsrichtung stationär an der Tragbasis (28) angebracht ist.

47. Vorrichtung nach Anspruch 45,
**dadurch gekennzeichnet, dass** Komponenten der Positionserfassungseinrichtung in Schienenlängsrichtung verfahrbar an der Tragbasis angebracht sind.

48. Vorrichtung nach einem der Ansprüche 1 bis 47,
**dadurch gekennzeichnet, dass** dem die Aufnahmeeinheit (24) tragenden Schlitten (32) Linearantriebsmittel zugeordnet sind, mittels welcher er in Schienenlängsrichtung antreibbar ist.

49. Vorrichtung nach Anspruch 48,
**dadurch gekennzeichnet, dass** auch einem die Positionierhalterungseinheit (36) tragenden Schlitten (34) Linearantriebsmittel zugeordnet sind, mittels welcher er in Schienenlängsrichtung unabhängig von dem die Aufnahmeeinheit (24) tragenden Schlitten (32) antreibbar ist.

50. Vorrichtung nach einem der Ansprüche 1 bis 49,
**gekennzeichnet durch** ein automatisches Zufuhr- und Entnahmesystem (89) zumindest für den Werkzeughalter (12), insbesondere auch für das Werkzeug (10), wobei dieses Zufuhr- und Entnahmesystem (89) dazu eingerichtet ist, den Werkzeughalter (12) und ggf. das Werkzeug (10) zwischen der Schrumpfvorrichtung und einem Bereithaltungsort hin und her zu transportieren.

51. Vorrichtung nach Anspruch 50,
**dadurch gekennzeichnet, dass** das Zufuhr- und Entnahmesystem (89) mindestens einen Greifroboter umfasst.

52. Vorrichtung nach einem der Ansprüche 1 bis 51,
**dadurch gekennzeichnet, dass** an dem die Aufnahmeeinheit (24) tragenden Schlitten (32) ein die Temperatur des Werkzeughalters (12) erfassender Temperaturfühler (114) angeordnet ist.

53. Vorrichtung nach einem der Ansprüche 1 bis 52,
**dadurch gekennzeichnet, dass** die den Werkzeughalter (12) haltende Aufnahmeeinheit (24), die das Rotationswerkzeug (10) gleichachsig zur Aufnahmeöffung (20) des in der Aufnahmeeinheit (24) gehaltenen Werkzeughalters (12) haltende Positionierhalterungseinheit (36) sowie die Temperiervorrichtung jeweils relativ zueinander in Achsrichtung der Aufnahmeöffnung (20) bewegbar an der Tragbasis (28) angeordnet sind und dass an der Tragbasis (28) eine Einstelleinrichtung angeordnet ist, mittels der bei wärmegedehntem Werkzeughalter der Abstand zwischen einem werkzeugnahen Stirnende (122) des in der Aufnahmeeinheit (24) gehaltenen Werkzeughalters (12) und dem zum Werkzeughalter (12) fernen Stirnende (124) des in die Aufnahmeöffnung (20) eingreifenden Rotationswerkzeugs (10) auf einen vorbestimmten Abstandswert (B) einstellbar ist.

54. Vorrichtung nach Anspruch 53,
**dadurch gekennzeichnet, dass** die Einstelleinrichtung eine die Position des werkzeugnahen Stirnendes (122) des Werkzeughalters (12) oder/und des zum Werkzeughalter (12) fernen Stirnendes (124) des Rotationswerkzeugs (10) bezogen auf das jeweils andere Stirnende oder bezogen auf eine Bezugsposition der Aufnahmeeinheit (24) oder der Positionierhalterungseinheit (36) erfassende Positionserfassungseinrichtung (80) aufweist.

55. Vorrichtung nach Anspruch 53 oder 54,
**dadurch gekennzeichnet, dass** die Einstelleinrichtung einen die Aufnahmeeinheit (24) und die Positionierhalterungseinheit (36) relativ zueinander bewegenden Positionierantrieb umfasst.

## Claims

1. Shrinking device for a tool holder (12), which holds a rotary tool (10) with a press fit in a central receiving opening (20), having a receiving unit (24) for receiving the tool holder and a temperature-controlling device (46, 64) at least for the thermal expansion, in particular also for subsequent cooling, of the tool holder in the region of the receiving opening, **characterised in that** the receiving unit is arranged on a carriage (32), which is guided such that it can be displaced in the longitudinal direction of the rails on a rail system (30), which runs parallel to the axis (16) of the tool holder received in the receiving unit and is fastened on a supporting base (28), and it being possible for said carriage to be moved along its displacement path into a region of action of the temperature-controlling device, and **in that** a positioning holding unit (36), which holds the tool (10) for it to be introduced into the receiving opening (20) of the tool holder (12), radially positioned relative to said receiving opening, is provided.

2. Device according to claim 1, **characterised in that** the carriage (32) is to be moved to different axial positions along the rail system (30) for heating and for cooling the tool holder (12).

3. Device according to claim 1, **characterised in that** the heating and cooling of the tool holder can be carried out by the temperature-controlling device at the same axial position of the carriage.

4. Device according to any one of claims 1 to 3, **characterised in that** the temperature-controlling device (46, 64) comprises at least one temperature-controlling unit (48, 66), which is arranged on the supporting base (28) in a manner in which it is guided such that it can be adjusted transversely, in particular in an orthogonal plane to the longitudinal direction of the rails, between at least one advanced position, in which the temperature-controlling unit has been moved into the displacement path of the carriage (32) and a temperature-controlling element (52, 70) of the temperature-controlling unit is, or can be, moved into an active position in which the tool holder (12) can move into a through-passage opening (54, 72) of the temperature-controlling element (52, 70), and a drawn-back position, in which the temperature-controlling unit has been moved out of the displacement path of the carriage.

5. Device according to claim 4, **characterised in that** the temperature-controlling element (52) has an induction coil which, for heating purposes, encloses the region of the receiving opening (20) of the tool holder (12) in an annular manner, at a radial distance.

6. Device according to claim 4 or 5, **characterised in that** the temperature-controlling element (70) has a cooling collar, through which liquid coolant can flow and which can be positioned on the tool holder (12), in contact therewith, for cooling purposes.

7. Device according to any one of claims 4 to 6, **characterised in that** the temperature-controlling element can be operated optionally for cooling or heating purposes.

8. Device according to any one of claims 4 to 7, **characterised in that** the temperature-controlling unit (48, 66) is fitted on the supporting base (28) in a stationary manner in the longitudinal direction of the rails.

9. Device according to any one of claims 4 to 7, **characterised in that** the temperature-controlling unit is arranged on the supporting base such that it can be adjusted but also locked, in the longitudinal direction of the rail.

10. Device according to any one of claims 4 to 9, **characterised in that**, in its drawn-back position, the temperature-controlling unit (48, 66) is retracted in a protected manner into an accommodating space, from which it can be moved out in order to reach its advanced position.

11. Device according to any one of claims 4 to 10, **characterised in that** the temperature-controlling unit (48c, 66c) is guided such that it can be moved linearly, at least in part, between its drawn-back position and its advanced position.

12. Device according to any one of claims 4 to 11, **characterised in that** the temperature-controlling unit (48, 66) is guided such that it can be pivoted, at least in part, between its drawn-back and its advanced position.

13. Device according to any one of claims 4 to 12, **characterised in that** the temperature-controlling unit (48c, 66c) is, or can be, fitted with a single temperature-controlling element (52c).

14. Device according to claim 13, **characterised in that** the temperature-controlling element, in terms of the size of its through-passage opening, can be adapted to different tool holders.

15. Device according to any one of claims 4 to 12, **characterised in that** the temperature-controlling unit (48, 66) is, or can be, fitted with a plurality of temperature-controlling elements (52, 70), which can optionally be moved individually in each case into the active position relative to the tool holder (12).

16. Device according to claim 15, **characterised in that** the temperature-controlling unit (48, 66) comprises a turret plate (50, 68), which is held such that it can be rotated about its plate axis (56, 74) and on which the temperature-controlling elements (52, 70) are arranged distributed in the peripheral direction.

17. Device according to claim 16, **characterised in that** the turret plate (50, 68) is fitted on a pivoting arm (58, 76) such that it can be pivoted in and out of the displacement path of the carriage (32).

18. Device according to any one of claims 4 to 17, **characterised in that** the temperature-controlling element (52, 70) is arranged on the temperature-controlling unit (48, 66) such that it can be exchanged for operational purposes.

19. Device according to any one of claims 4 to 18, **characterised in that** the temperature-controlling device (46, 64) comprises a plurality of at least two temperature-controlling units (48, 66) which are guided such that they can be adjusted independently of one another.

20. Device according to claim 19, **characterised in that** at least some of the temperature-controlling units (48, 66) are arranged one behind the other in the longitudinal direction of the rails.

21. Device according to claim 19 or 20, **characterised in that** at least some of the temperature-controlling units are arranged opposite one another transverse to the longitudinal direction of the rails. direction of the rails.

22. Device according to any one of claims 19 to 21, **characterised in that** the temperature-controlling device (46c, 64c) comprises two groups of temperature-controlling units (48c, 66c), which are arranged one behind the other, adjacent in each case, in the longitudinal direction of the rails and are, or can be, fitted in each case with a single temperature-controlling element (52c), the temperature-controlling elements of one group all serving to cool the tool holder and the temperature-controlling elements of the other group all serving to heat the tool holder.

23. Device according to any one of claims 19 to 21, **characterised in that** the temperature-controlling device (46, 64) comprises two temperature-controlling units (48, 66), of which each is, or can be, fitted with a plurality of temperature-controlling elements (52, 70), which can optionally be moved individually in each case into the active position relative to the tool holder (12), the temperature-controlling elements of one temperature-controlling unit all serving to cool the tool holder and the temperature-controlling elements of the other temperature-controlling unit all serving to heat the tool holder.

24. Device according to any one of claims 19 to 23, **characterised in that** at least one of the temperature-controlling units (70) has at least one cooling collar, which is connected to a coolant circuit (71) and can be positioned on the tool holder (12).

25. Device according to claim 24, **characterised in that** the coolant circuit is configured as a heat-pump circuit, in the case of which the cooling collar directly forms an evaporator element of the heat-pump circuit.

26. Device according to any one of claims 1 to 25, **characterised in that** the rail system (30) is fastened on the supporting base (28) with the longitudinal direction of the rails substantially parallel to the horizontal.

27. Device according to any one of claims 1 to 25, **characterised in that** the rail system (30a) is fastened to the supporting base (28a) with the longitudinal direction of the rails running obliquely in relation to the horizontal, in particular at a small acute angle thereto.

28. Device according to any one of claims 1 to 25, **characterised in that** the rail system (30c) is fastened on the supporting base (28c) with the longitudinal direction of the rails substantially parallel to the vertical.

29. Device according to any one of claims 1 to 28, **characterised in that** the positioning holding unit is arranged in a stationary manner in the longitudinal direction of the rails and, in order to introduce the tool into the receiving opening of the tool holder, the carriage can be moved up to the positioning holding unit.

30. Device according to any one of claims 1 to 28, **characterised in that** the positioning holding unit (36) is arranged on a further carriage (34), which is guided such that it can be displaced in the longitudinal direction of the rails on the rail system (30) and, to introduce the tool (10) into the receiving opening (20) of the tool holder (12), can be moved relative to the first-mentioned carriage (32), in the direction of the latter.

31. Device according to claim 30, **characterised in that** at least one guide rail (30) of the rail system serves to guide the two carriages (32, 34) together.

32. Device according to any one of claims 1 to 31, **characterised in that** the positioning holding unit (36) can be adjusted in at least one axis-normal direction.

33. Device according to any one of claims 1 to 32, **characterised in that** the positioning holding unit (36) is fitted with radial movement clearance on a carriage (34) carrying the positioning holding unit (36).

34. Device according to any one of claims 1 to 33, **characterised in that**, with the rail system (30) running horizontally or inclined obliquely in relation to the horizontal, the positioning holding unit (36) has a positioning channel (40) which is open at the top, runs in the longitudinal direction of the rails and in which the tool (10) can be positioned.

35. Device according to claim 34, **characterised in that** the positioning channel (40) is of prismatic configuration.

36. Device according to claim 34 or 35, **characterised in that** the positioning channel (40a) is assigned a stop surface (108a) for axially positioning the tool.

37. Device according to any one of claims 1 to 36, **characterised in that** the positioning holding unit comprises clamping means (110b) for clamping the tool (10b) in radially.

38. Device according to claim 37, **characterised in that** the clamping means (110b) comprise an arrangement of clamping jaws (112b), which can be moved relative to one another and between which the tool (10b) can be clamped in.

39. Device according to claim 38, **characterised in that** at least one of the clamping jaws (112b) is configured as a clamping prism.

40. Device according to any one of claims 1 to 39, **characterised in that** a spindle (90), which is arranged with its spindle axis (92) equiaxial in relation to the tool holder (12) received in the receiving unit (24) and is, or can be, connected in a rotationally fixed manner to the receiving unit at one of its ends, is mounted such that it can be rotated about its spindle axis on the carriage (32) carrying the receiving unit (24), **in that** the carriage carrying the receiving unit (24), furthermore, carries a drive motor (94) for driving the spindle in rotation, **in that** the receiving unit is configured for clamping the tool holder in in a rotationally fixed manner, and **in that** arranged on the carriage carrying the receiving unit (24) is a sensor arrangement (96), which makes it possible to detect imbalance forces which act on the spindle as it rotates.

41. Device according to claim 40, **characterised in that** the tool holder (12) has an axially adjustable stop screw (98) for the tool (10), said screw being arranged centrally in the receiving opening (20), and fitted on the supporting base (28) is a holding structure (100), which holds a screwing tool (104) in a radially oriented manner in relation to the stop screw.

42. Device according to claim 41, **characterised in that** the holding structure (100) comprises a movement guide, by means of which the screwing tool (104) can be moved transversely, in particular in an orthogonal plane to the longitudinal direction of the rails, in and out of the displacement path of the carriage (32) carrying the receiving unit (24).

43. Device according to claim 41 or 42, **characterised in that** the holding structure (100) is fitted on the supporting base (28) in a stationary manner in the longitudinal direction of the rails.

44. Device according to any one of claims 41 to 43, **characterised in that** the screwing tool (104) is supported in an axially resilient manner (at 106) on the holding structure (100).

45. Device according to any one of claims 1 to 44, **characterised by** an, in particular, optical position detecting mechanism (80), which is arranged on the supporting base (28) and intended to carry out position detecting tasks at least on the tool (10) held in the positioning holding unit (36).

46. Device according to claim 45, **characterised in that** the position detecting mechanism (80) is fitted on the supporting base (28) in a stationary manner in the longitudinal direction of the rails.

47. Device according to claim 45, **characterised in that** components of the position detecting mechanism are fitted on the supporting base such that they can be displaced in the longitudinal direction of the rails.

48. Device according to any one of claims 1 to 47, **characterised in that** the carriage (32) carrying the receiving unit (24) is assigned linear drive means, which can drive it in the longitudinal direction of the rails.

49. Device according to claim 48, **characterised in that** a carriage (34) carrying the positioning holding unit (36) is also assigned linear drive means, which can drive it in the longitudinal direction of the rails independently of the carriage (32) carrying the receiving unit (24).

50. Device according to any one of claims 1 to 49, **characterised by** an automatic feeding and removal system (89) at least for the tool holder (12), in particular also for the tool (10), said feeding and removal system (89) being set up for transporting the tool holder (12) and optionally the tool (10) back and forth between the shrinking device and a stock location.

51. Device according to claim 50, **characterised in that** the feeding and removal system (89) comprises at least one gripping robot.

52. Device according to any one of claims 1 to 51, **characterised in that** a temperature sensor (114), which detects the temperature of the tool holder (12), is arranged on the carriage (32) carrying the receiving unit (24).

53. Device according to any one of claims 1 to 52, **characterised in that** the receiving unit (24) holding the tool holder (12), the position holding unit (36) holding the rotary tool (10) equiaxially in relation to the receiving opening (20) of the tool holder (12) held in the receiving unit (24) and the temperature-controlling device are arranged on the supporting base (28) such that they can be moved relative to one another in each case in the axial direction of the receiving opening (20) and **in that** arranged on the supporting base (28) is a setting mechanism, by means of which, with the tool holder thermally expanded, it is possible for the distance between an end (122) of the tool holder (12) held in the receiving unit (24), said end being in the vicinity of the tool, and the end (124) of the rotary tool (10) engaging in the receiving opening (20), said end being remote from the tool holder (12), to be set to a predetermined distance value (B).

54. Device according to claim 53, **characterised in that** the setting mechanism has a position detecting mechanism (80), which detects the position of the end (122) of the tool holder (12), said end being in the vicinity of the tool, and/or of the end (124) of the rotary tool (10), said end being remote from the tool holder (12), in relation to the respective other end or in relation to a reference position of the receiving unit (24) or of the position holding unit (36).

55. Device according to claim 53 or 54, **characterised in that** the setting mechanism comprises a positioning drive, which moves the receiving unit (24) and the positioning holding unit (36) relative to one another.

## Revendications

1. Dispositif de contraction pour un porte-outil (12) maintenant un outil rotatif (10) en ajustement serré dans une ouverture de réception (20) centrée, avec une unité de réception (24) servant à recevoir le porte-outil et un dispositif de mise à température (46, 64) permettant au moins la dilatation thermique, en particulier aussi le refroidissement successif du porte-outil dans la zone de l'ouverture de réception,
**caractérisé en ce que** l'unité de réception est agencée au niveau d'un chariot (32) qui est guidé de façon déplaçable dans le sens longitudinal des rails sur un système de rails (30) fixé sur une base support (28) et s'étendant parallèlement à l'axe (16) du porte-outil reçu dans l'unité de réception et peut être déplacé le long de sa trajectoire dans une zone active du dispositif de mise à température, et **en ce qu'**il est prévu une unité de maintien de positionnement (36) maintenant l'outil (10), pour son introduction dans l'ouverture de réception (20) du porte-outil (12), en position radiale par rapport à cette dernière.

2. Dispositif selon la revendication 1,
**caractérisé en ce que** le chariot (32) doit être déplacé vers différentes positions axiales le long du système de rails (30) pour chauffer et refroidir le porte-outil (12).

3. Dispositif selon la revendication 1,
**caractérisé en ce que** le chauffage et le refroidissement du porte-outil peuvent être induits par le dispositif de mise à température à une même position axiale du chariot.

4. Dispositif selon l'une quelconque des revendications 1 à 3,
**caractérisé en ce que** le dispositif de mise à température (46, 64) comprend au moins une unité de mise à température (48, 66) qui est agencée au niveau de la base support (28) de manière guidée de façon déplaçable transversalement, en particulier dans un plan orthogonal au sens longitudinal des rails entre au moins une position avancée, dans laquelle l'unité de mise à température entre dans la trajectoire du chariot (32) et un élément de mise à température (52, 70) de l'unité de mise à température est amené ou peut être amené dans une position active permettant l'insertion du porte-outil (12) dans une ouverture de passage (54, 72) de l'élément de mise à température (52, 70) et une position reculée dans laquelle l'unité de mise à température sort de la trajectoire du chariot.

5. Dispositif selon la revendication 4,
**caractérisé en ce que** l'élément de mise à température (52) présente une bobine d'induction entourant de manière annulaire à une distance radiale la zone de l'ouverture de réception (20) du porte-outil (12) pour le chauffage.

6. Dispositif selon la revendication 4 ou 5,
**caractérisé en ce que** l'élément de mise à température (70) présente un manchon de refroidissement pouvant être traversé par un liquide de refroidissement et pouvant être mis en contact physique sur le porte-outil (12) pour le refroidissement.

7. Dispositif selon l'une quelconque des revendications 4 à 6,
**caractérisé en ce que** l'élément de mise à température peut fonctionner au choix de manière à refroidir ou à chauffer.

8. Dispositif selon l'une quelconque des revendications 4 à 7,
**caractérisé en ce que** l'unité de mise à température (48, 66) est installée au niveau de la base support (28) de manière stationnaire dans le sens longitudinal des rails.

9. Dispositif selon l'une quelconque des revendications 4 à 7,
**caractérisé en ce que** l'unité de mise à température est agencée au niveau de la base support de manière mobile dans le sens longitudinal des rails mais arrêtable.

10. Dispositif selon l'une quelconque des revendications 4 à 9,
**caractérisé en ce que** l'unité de mise à température (48, 66) rentre dans sa position reculée de manière protégée dans un espace de rangement duquel elle peut sortir pour atteindre sa position avancée.

11. Dispositif selon l'une quelconque des revendications 4 à 10,
**caractérisé en ce que** l'unité de mise à température (48c, 66c) est guidée au moins en partie de manière linéaire entre sa position reculée et sa position avancée.

12. Dispositif selon l'une quelconque des revendications 4 à 11,
**caractérisé en ce que** l'unité de mise à température (48, 66) est guidée au moins en partie de manière pivotante entre sa position reculée et sa position avancée.

13. Dispositif selon l'une quelconque des revendications 4 à 12,
**caractérisé en ce que** l'unité de mise à température (48c, 66c) est munie ou peut être munie d'un seul élément de mise à température (52c).

14. Dispositif selon la revendication 13,
**caractérisé en ce que** l'élément de mise à température peut être adapté en ce qui concerne la taille de son ouverture de passage à différents porte-outils.

15. Dispositif selon l'une quelconque des revendications 4 à 12,
**caractérisé en ce que** l'unité de mise à température (48, 66) est munie ou peut être munie de plusieurs éléments de mise à température (52, 70) pouvant être amenés au choix respectivement individuellement en position active par rapport au porte-outil (12).

16. Dispositif selon la revendication 15,
**caractérisé en ce que** l'unité de mise à température (48, 66) comprend un plateau revolver (50, 68) maintenu de manière rotative autour de son axe de plateau (56, 74), au niveau duquel plateau les éléments de mise à température (52, 70) sont répartis dans le sens périphérique.

17. Dispositif selon la revendication 16,
**caractérisé en ce que** le plateau revolver (50, 68) est installé au niveau d'un bras pivotant (58, 76) de manière à pouvoir pivoter dans et hors de la trajectoire du chariot (32).

18. Dispositif selon l'une quelconque des revendications 4 à 17,
**caractérisé en ce que** l'élément de mise à température (52, 70) est agencé au niveau de l'unité de mise à température (48, 66) de manière à pouvoir être remplacé en fonctionnement.

19. Dispositif selon l'une quelconque des revendications 4 à 18,
**caractérisé en ce que** le dispositif de mise à température (46, 64) comprend une pluralité d'au moins deux unités de mise à température (48, 66) guidées de façon déplaçable indépendamment l'une de l'autre.

20. Dispositif selon la revendication 19,
**caractérisé en ce qu'**au moins une partie des unités de mise à température (48, 66) sont agencées les unes derrière les autres dans le sens longitudinal des rails.

21. Dispositif selon la revendication 19 ou 20,
**caractérisé en ce qu'**au moins une partie des unités de mise à température sont agencées de manière à se faire face transversalement au sens longitudinal des rails.

22. Dispositif selon l'une quelconque des revendications 19 à 21,
**caractérisé en ce que** le dispositif de mise à température (46c, 64c) comprend deux groupes d'unités de mise à température (48c, 66c) munies ou pouvant être munies respectivement d'un seul élément de mise à température (52c) et agencées les unes derrière les autres respectivement de manière adjacente dans le sens longitudinal des rails, les éléments de mise à température de l'un des groupes servant tous au refroidissement du porte-outil et les éléments de mise à température de l'autre groupe servant tous au chauffage du porte-outil.

23. Dispositif selon l'une quelconque des revendications 19 à 21,
**caractérisé en ce que** le dispositif de mise à température (46, 64) comprend deux unités de mise à température (48, 66), dont chacune est munie ou peut être munie de plusieurs éléments de mise à température (52, 70) pouvant être amenés au choix respectivement individuellement en position active par rapport au porte-outil (12), les éléments de mise à température de l'une des unités de mise à température servant tous au refroidissement du porte-outil et les éléments de mise à température de l'autre unité de mise à température servant tous au chauffage du porte-outil.

24. Dispositif selon l'une quelconque des revendications 19 à 23,
**caractérisé en ce qu'**au moins une des unités de mise à température (70) présente au moins un manchon de refroidissement raccordé à un circuit d'agent réfrigérant (71) et placé sur le porte-outil (12).

25. Dispositif selon la revendication 24,
**caractérisé en ce que** le circuit d'agent réfrigérant est réalisé sous forme de circuit de pompe à chaleur dans lequel le manchon de refroidissement forme directement un élément évaporateur du circuit de pompe à chaleur.

26. Dispositif selon l'une quelconque des revendications 1 à 25,
**caractérisé en ce que** le système de rails (30) avec sens longitudinal des rails essentiellement parallèle à l'horizontale est fixé au niveau de la base support (28).

27. Dispositif selon l'une quelconque des revendications 1 à 25,
**caractérisé en ce que** le système de rails (30a) avec sens longitudinal des rails s'étendant de manière inclinée par rapport à l'horizontale, en particulier avec un petit angle aigu par rapport à celle-ci, est fixé au niveau de la base support (28a).

28. Dispositif selon l'une quelconque des revendications 1 à 25,
**caractérisé en ce que** le système de rails (30c) avec sens longitudinal des rails essentiellement parallèle à la verticale est fixé au niveau de la base support (28c).

29. Dispositif selon l'une quelconque des revendications 1 à 28,
**caractérisé en ce que** l'unité de maintien de positionnement est agencée de manière stationnaire dans le sens longitudinal des rails et le chariot peut être approché de l'unité de maintien de positionnement pour introduire l'outil dans l'ouverture de réception du porte-outil.

30. Dispositif selon l'une quelconque des revendications 1 à 28,
**caractérisé en ce que** l'unité de maintien de positionnement (36) est agencée au niveau d'un autre chariot (34) qui est guidé de façon déplaçable dans le sens longitudinal des rails sur le système de rails (30) et qui est mobile par rapport au dit premier chariot (32) en direction de celui-ci pour introduire l'outil (10) dans l'ouverture de réception (20) du porte-outil (12).

31. Dispositif selon la revendication 30,
**caractérisé en ce qu'**au moins un rail de guidage (30) du système de rails sert au guidage commun des deux chariots (32, 34).

32. Dispositif selon l'une quelconque des revendications 1 à 31,
**caractérisé en ce que** l'unité de maintien de positionnement (36) est ajustable dans au moins un sens normal à l'axe.

33. Dispositif selon l'une quelconque des revendications 1 à 32,
**caractérisé en ce que** l'unité de maintien de positionnement (36) est installée avec jeu radial au niveau d'un chariot (34) portant l'unité de maintien de positionnement (36).

34. Dispositif selon l'une quelconque des revendications 1 à 33,
**caractérisé en ce que** lorsque le système de rails (30) s'étend horizontalement ou de manière inclinée par rapport à l'horizontale, l'unité de maintien de positionnement (36) présente une rainure de positionnement (40) ouverte vers le haut s'étendant dans le sens longitudinal des rails, dans laquelle l'outil (10) peut être inséré.

35. Dispositif selon la revendication 34,
**caractérisé en ce que** la rainure de positionnement (40) est réalisée de manière prismatique.

36. Dispositif selon la revendication 34 ou 35,
**caractérisé en ce qu'**une surface de butée (108a) est affectée à la rainure de positionnement (40a) pour le positionnement axial de l'outil.

37. Dispositif selon l'une quelconque des revendications 1 à 36,
**caractérisé en ce que** l'unité de maintien de positionnement comprend des moyens de serrage (110b) permettant le serrage radial de l'outil (10b).

38. Dispositif selon la revendication 37,
**caractérisé en ce que** les moyens de serrage (110b) comprennent un agencement de mâchoires de serrage (112b) relativement déplaçables les unes vers les autres, entre lesquelles l'outil (10b) peut être serré.

39. Dispositif selon la revendication 38,
**caractérisé en ce qu'**au moins une des mâchoires de serrage (112b) est réalisée sous forme de prisme de serrage.

40. Dispositif selon l'une quelconque des revendications 1 à 39,
**caractérisé en ce qu'**au niveau du chariot (32) portant l'unité de réception (24), une broche (90) agencée avec son axe de broche (92) sur le même axe que le porte-outil (12) reçu dans l'unité de réception et reliée ou pouvant être reliée de manière solidaire en rotation à une de ses extrémités à l'unité de réception (24) est logée de manière rotative autour de son axe de broche, **en ce que** le chariot portant l'unité de réception (24) porte en outre un moteur d'entraînement (94) pour l'entraînement rotatif de la broche, **en ce que** l'unité de réception est réalisée pour le serrage solidaire en rotation du porte-outil et **en ce qu'**un agencement de capteurs (96) qui permet la détection de forces de déséquilibre agissant pendant le mouvement de rotation de la broche sur celle-ci, est agencé au niveau du chariot portant l'unité de réception (24).

41. Dispositif selon la revendication 40,
**caractérisé en ce que** le porte-outil (12) présente une vis de butée (98) axialement ajustable, agencée de manière centrée dans l'ouverture de réception (20) pour l'outil (10) et une construction de retenue (100) maintenant un outil de vissage (104) orienté de manière radiale par rapport à la vis de butée est installée au niveau de la base support (28).

42. Dispositif selon la revendication 41,
**caractérisé en ce que** la construction de retenue (100) comprend un guide de déplacement, au moyen duquel l'outil de vissage (104) peut être déplacé transversalement, en particulier dans un plan orthogonal au sens longitudinal des rails dans et hors de la trajectoire du chariot (32) portant l'unité de réception (24).

43. Dispositif selon la revendication 41 ou 42,
**caractérisé en ce que** la construction de retenue (100) est installée au niveau de la base support (28) de manière stationnaire dans le sens longitudinal des rails.

44. Dispositif selon l'une quelconque des revendications 41 à 43,
**caractérisé en ce que** l'outil de vissage (104) est supporté de manière axialement élastique (pour 106) au niveau de la construction de retenue (100).

45. Dispositif selon l'une quelconque des revendications 1 à 44,
**caractérisé par** un dispositif de détection de position (80) en particulier optique, agencé au niveau de la base support (28) permettant de réaliser des missions de détection de position au moins au niveau de l'outil (10) maintenu dans l'unité de maintien de positionnement (36).

46. Dispositif selon la revendication 45,
**caractérisé en ce que** le dispositif de détection de position (80) est installé au niveau de la base support (28) de manière stationnaire dans le sens longitudinal des rails.

47. Dispositif selon la revendication 45,
**caractérisé en ce que** des composants du dispositif de détection de position sont installés au niveau de la base support de manière déplaçable dans le sens longitudinal des rails.

48. Dispositif selon l'une quelconque des revendications 1 à 47,
**caractérisé en ce que** des moyens d'entraînement linéaires sont affectés au chariot (32) portant l'unité de réception (24), au moyen desquels il peut être entraîné dans le sens longitudinal des rails.

49. Dispositif selon la revendication 48,
**caractérisé en ce que** des moyens d'entraînement linéaires sont également affectés à un chariot (34) portant l'unité de maintien de positionnement (36) au moyens desquels il peut être entraîné dans le sens longitudinal des rails indépendamment du chariot (32) portant l'unité de réception (24).

50. Dispositif selon l'une quelconque des revendications 1 à 49,
**caractérisé par** un système d'alimentation et de prélèvement automatique (89) au moins pour le porte-outil (12), en particulier aussi pour l'outil (10), ce système d'alimentation et de prélèvement (89) étant conçu pour transporter le porte-outil (12) et le cas échéant l'outil (10) entre le dispositif de contraction et un lieu de mise à disposition.

51. Dispositif selon la revendication 50,
**caractérisé en ce que** le système d'alimentation et de prélèvement (89) comprend au moins un robot de préhension.

52. Dispositif selon l'une quelconque des revendications 1 à 51,
**caractérisé en ce qu'**une sonde de température (114) détectant la température du porte-outil (12) est agencée au niveau du chariot (32) portant le l'unité de réception (24).

53. Dispositif selon l'une quelconque des revendications 1 à 52,
**caractérisé en ce que** l'unité de réception (24) maintenant le porte-outil (12), l'unité de maintien de positionnement (36) maintenant l'outil rotatif (10) sur le même axe que l'ouverture de réception (20) du porte-outil (12) maintenu dans l'unité de réception (24) ainsi que le dispositif de mise à température sont agencés au niveau de la base support (28) respectivement de manière relativement mobile l'un par rapport à l'autre dans le sens axial de l'ouverture de réception (20) et **en ce qu'**un dispositif de réglage est agencé au niveau de la base support (28), au moyen duquel lorsque le porte-outil est dilaté thermiquement, la distance entre une extrémité frontale proche de l'outil (122) du porte-outil (12) maintenu dans l'unité de réception (24) et l'extrémité frontale éloignée (124) du porte-outil (12) de l'outil rotatif (10) prenant dans l'ouverture de réception (20) peut être réglée à une valeur prédéfinie (B).

54. Dispositif selon la revendication 53,
**caractérisé en ce que** le dispositif de réglage présente un dispositif de détection de position (80) détectant la position de l'extrémité frontale proche de l'outil (122) du porte-outil (12) et/ou de l'extrémité frontale éloignée (124) du porte-outil (12) de l'outil rotatif (10) par rapport à l'autre extrémité frontale ou par rapport à une position de référence de l'unité de réception (24) ou de l'unité de maintien de positionnement (36).

55. Dispositif selon la revendication 53 ou 54,
**caractérisé en ce que** le dispositif de réglage comprend un entraînement de positionnement déplaçant l'unité de réception (24) et l'unité de maintien de positionnement (36) de manière relative l'une par rapport à l'autre.
